(19) Europäisches Patentamt / European Patent Office / Office européen des brevets

(11) **EP 4 145 270 A1**

(12) **EUROPEAN PATENT APPLICATION**

(43) Date of publication:
08.03.2023 Bulletin 2023/10

(21) Application number: 21194865.8

(22) Date of filing: 03.09.2021

(51) International Patent Classification (IPC):
**G06F 7/544** (2006.01) **G06K 9/62** (2006.01)
**G06V 20/10** (2022.01)

(52) Cooperative Patent Classification (CPC):
**G06F 7/544; G06F 18/00; G06V 20/188**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Bayer CropScience K.K.**
**Tokyo 100-8268 (JP)**

• **SaraniaSat Inc.**
**Tujunga, CA 91042 (US)**

(72) Inventor: **The designation of the inventor has not yet been filed**

(74) Representative: **BIP Patents**
**c/o Bayer Intellectual Property GmbH**
**Alfred-Nobel-Straße 50**
**40789 Monheim am Rhein (DE)**

Remarks:
Claims 16 and 17 are deemed to be abandoned due to non-payment of the claims fees (Rule 45(3) EPC).

(54) **SYSTEM, INFORMATION PROCESSING DEVICE, SERVER DEVICE, PROGRAM, OR METHOD**

(57) Problem

An example system of the present invention is capable of collecting information about plants in a more appropriate manner.

Resolution Means

A system, provided with: an acquisition unit that acquires data on object spectrum data; a calculation unit that, based on the data on object spectrum data, calculates information on a BAND-INDEX including an error bar; and a determination unit that performs a comparative determination of the information on a BAND-INDEX including an error bar and information on a BAND-INDEX including an error bar for a specific plant type. The system, wherein the specific plant type is a specific weed type, and the determination unit determines whether the error bar for a BAND-INDEX based on data on the object spectrum data overlaps with an error bar for a BAND-INDEX based on the specific type of weed.

FIG. 13

Input unit 21

Reference-data holding unit 22

Determination unit 23

Transmission unit 24

EP 4 145 270 A1

**Description**

The present invention relates to a system, information processing device, server device, program, or method for collecting information relating to plants.

In recent years, it is anticipated that advanced art such as robotics, big data, artificial intelligence, and the IoT (Internet of Things: Internet of Things) will be utilized in the field of agriculture for aims of increasing production volumes, improving quality, reducing costs, and the like with regard to crops. Such agriculture is referred to as "precision agriculture", "smart agriculture", or the like. To obtain a detailed understanding of a state of the plants, optical remote sensing can be performed by a drone, airplane, balloon, satellite, or the like equipped with a measuring device. Using a so-called hyperspectral camera as this measuring device enables data to be acquired that are more detailed than an image that simply photographs the plants. This also enables, for example, automatically identifying a plant type included in a wide range of vegetation without depending on visual confirmation by an experienced expert.

The present state of the art is described in JP 2013-109424 A, JP 2014-119296 A, JP 2014-182516 A, JP 2015-77113 A, JP 2016-165303 A, JP 2013-145507 A.

In the above, JP 2013-109424 A discloses an invention of a program, information processing method, and device for plant-type specification. In the invention of JP 2013-109424 A, a hyperspectral camera is used to measure a reflection spectrum of a tree. By comparing this measurement result and a reference spectrum of a tree wanting to be identified, a tree type is determined based on a similarity between the two. Here, a spectral band used in measurement is one wherein a partial band that is affected by fluctuations in chlorophyll content is removed from a wavelength band of no less than 400 nm and no greater than 900 nm included in the visible and near-infrared bands.

Furthermore, JP 2014-119296 A discloses an invention of a plant-type determination program, a plant-type determination method, and a plant-type identification device. In the invention of JP 2014-119296 A, a hyperspectral camera is used to measure a spectrum of a tree. By performing matching between this measurement result and mixed spectral data, a tree type is determined based on a similarity between the two. Here, a spectral band used in matching is a wavelength band of no less than 400 nm and no greater than 1,050 nm included in the visible and near-infrared bands. Moreover, the mixed spectral data are generated based on tree spectral data and soil spectral data.

Furthermore, JP 2014-182516 A discloses an invention of a tree-type identification device and a tree-type identification method. In the invention of , JP 2014-182516 A, a hyperspectral camera is used to measure a reflection spectrum of a tree. By comparing this measurement result and reference spectral data of each tree, a tree type is determined based on a similarity between the two. Here, even when spectra of two different types of trees are copresent in one pixel included in the spectral data, the types of the copresent trees can be determined by using mixed reference spectral data that mix the reference spectral data of the two types of trees at a predetermined mixing ratio.

However, even in the above mentioned state of the art and JP 2015-77113 A, JP 2016-165303 A, JP 2013-145507 A, there is a problem wherein spectral data on plants are not effectively utilized. Therefore, various embodiments of the present invention provide a system, information processing device, server device, program, or method for solving the above problem.

One working example of the present application is a system, provided with:

an acquisition unit that acquires data on object spectrum data;

a calculation unit that, based on the data on object spectrum data, calculates information on a BAND-INDEX including an error bar; and

a determination unit that performs a comparative determination of the information on a BAND-INDEX including an error bar and information on a BAND-INDEX including an error bar for a specific plant type.

One embodiment of the present invention enables information relating to plants to be collected more appropriately.

Inubie and tainubie refer to the weed genera *Echinochloa,* in particular *E. oryzicola* or *crus galli.*

Rice cultivars may be selected from the group comprising of Yumeaoba, Nipponbare, Koshihikari, Hiyokumochi, Milagrosa, Dinorado.

Omodaka refers to the weed species *Sagittaria sagittifolia..*

Kurogawai refers to the weed species *Eleocharis kuroguwai.*

[Brief Description of Drawings]

[FIG. 1(a)] FIG. 1(a) is a graph relating to a reflectivity of inubie.

[FIG. 1(b)] FIG. 1(b) is a graph relating to an INDEX of inubie.

[FIG. 2(a)] FIG. 2(a) is BAND-INDEX spectra of Hiyokumochi and Yumeaoba.

[FIG. 2(b)] FIG. 2(b) is BAND-INDEX spectra of omodaka and kuroguwai.

[FIG. 3] (a) in FIG. 3 is a diagram including a graph illustrating one example of a BAND-INDEX, (b) in FIG. 9 is a photograph taken on July 5, and (c) in FIG. 9 is a photograph taken on July 25.

[FIG. 4] FIG. 4 is daily changes in a BAND-INDEX spectrum of inubie.

[FIG. 5] FIG. 5 is one example of a table relating to flowering times and ripening.

[FIG. 6] In FIG. 6, (a) is growth stages and periods of rice, and (b) illustrates growth stages and periods of weeds.

[FIG. 7(a)] FIG. 7(a) is BAND-INDEX spectra of growth stage 1 of rice and growth stage 1 of inubie.

[FIG. 7(b)] FIG. 7(b) is BAND-INDEX spectra of growth stage 1 of rice and growth stage 1 oftainubie.

[FIG. 7(c)] FIG. 7(c) is BAND-INDEX spectra of growth stage 2 of rice and growth stage 1 of kuroguwai.

[FIG. 8] FIG. 8 is recommended times of distinguishing between rice and weeds and BAND number ranges.

[FIG. 9] (a) in FIG. 9 is a graph illustrating one example of a BAND-INDEX.

[FIG. 10(a)] FIG. 10(a) is one example of a graph illustrating a correlation relating to one example of a BAND-INDEX.

[FIG. 10(b)] FIG. 10(b) is one example of a graph illustrating a correlation relating to one example of a BAND-INDEX.

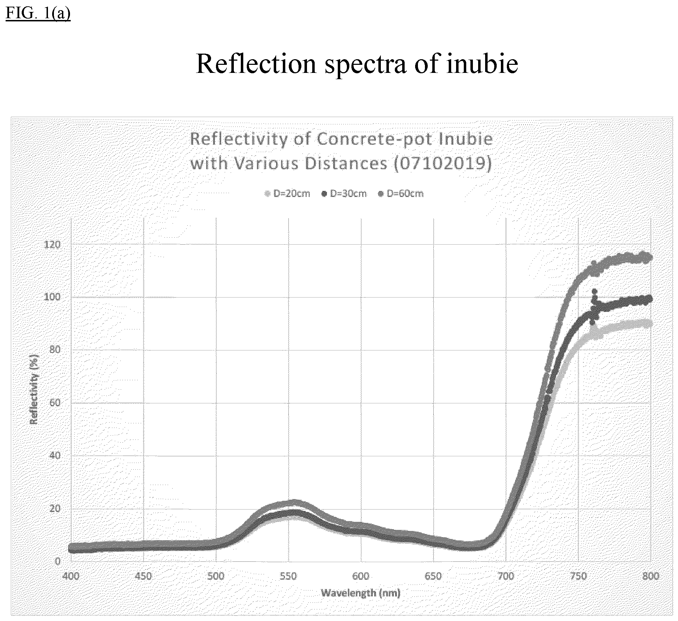

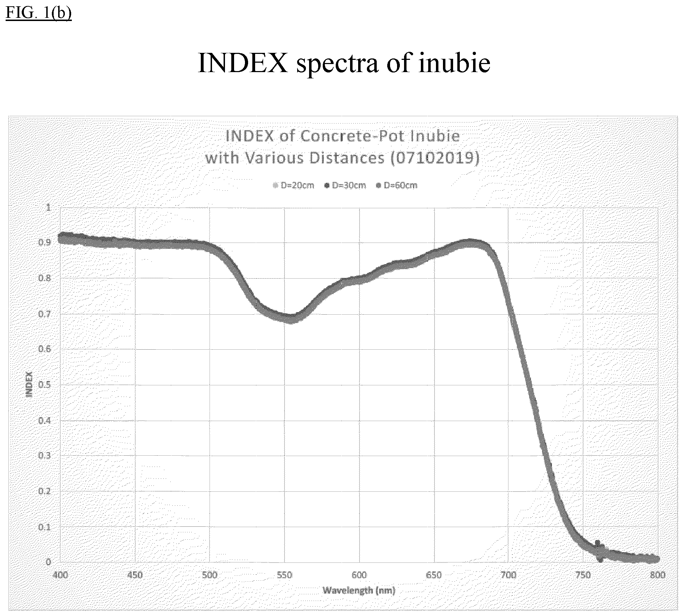

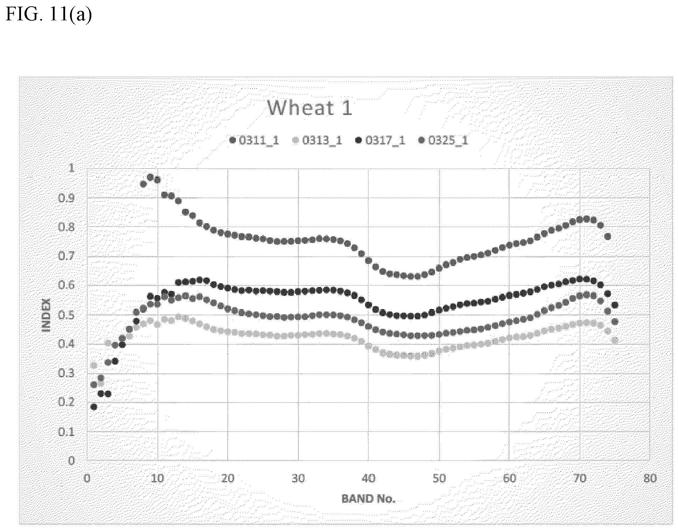

[FIG. 1 1(a)] FIG. 11(a) is a graph illustrating one example of a BAND-INDEX.

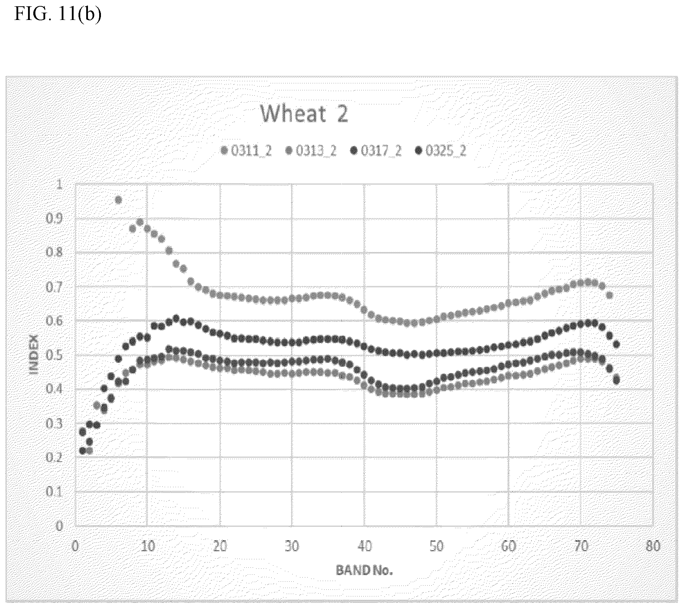

[FIG. 11(b)] FIG. 11(b) is a graph illustrating one example of a BAND-INDEX.

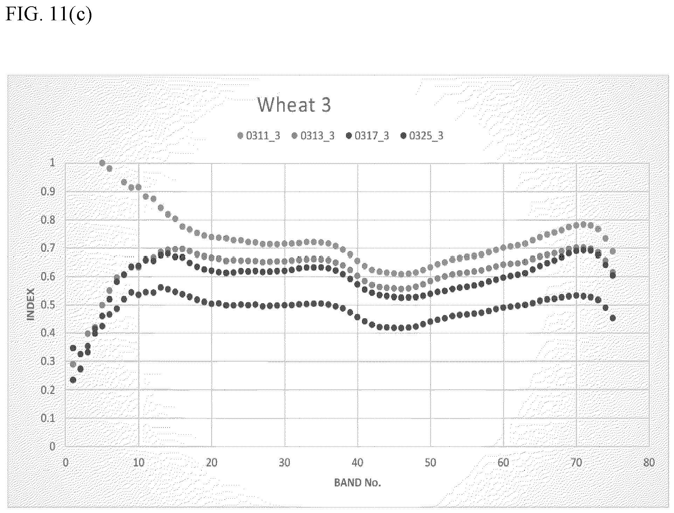

[FIG. 11(c)] FIG. 11(c) is a graph illustrating one example of a BAND-INDEX.

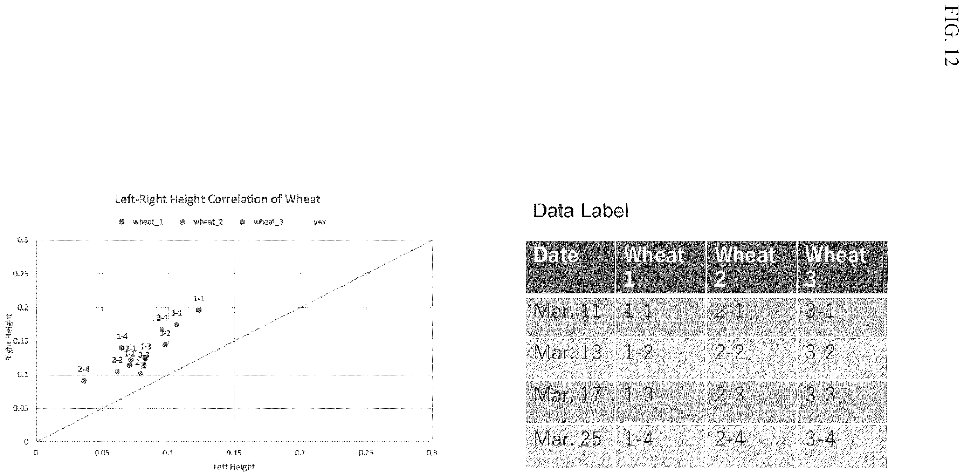

[FIG. 12] FIG. 12 includes a graph relating to one example of a BAND-INDEX.

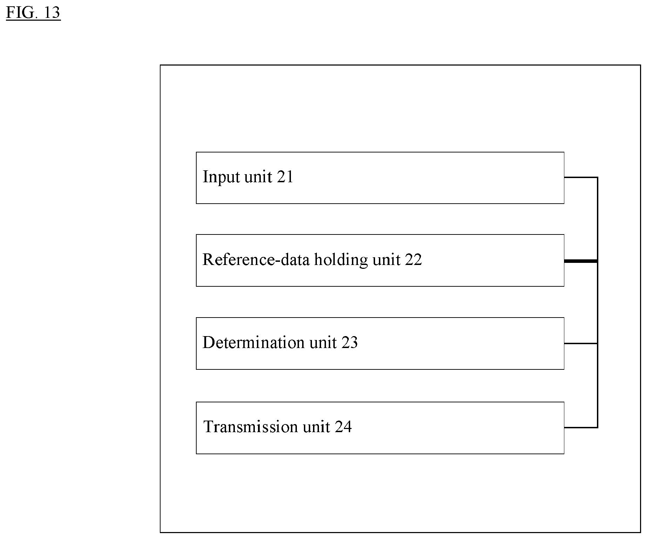

[FIG. 13] FIG. 13 is a block diagram illustrating a specific example of functions of a system according to one working example.

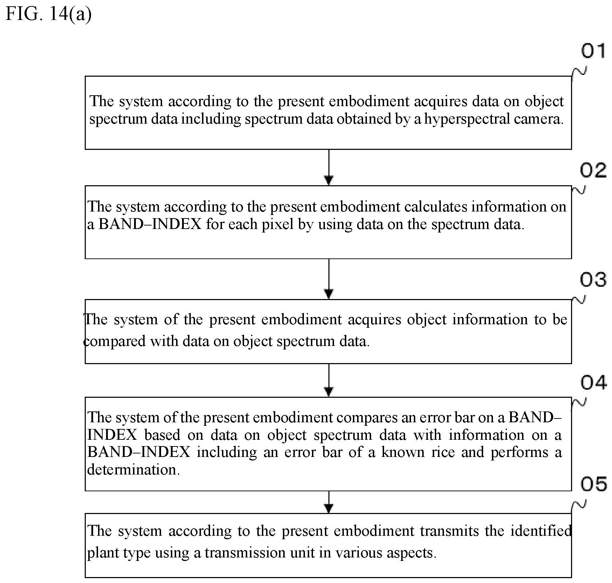

[FIG. 14(a)] FIG. 14(a) is a block diagram illustrating a flow example of the system according to one working example.

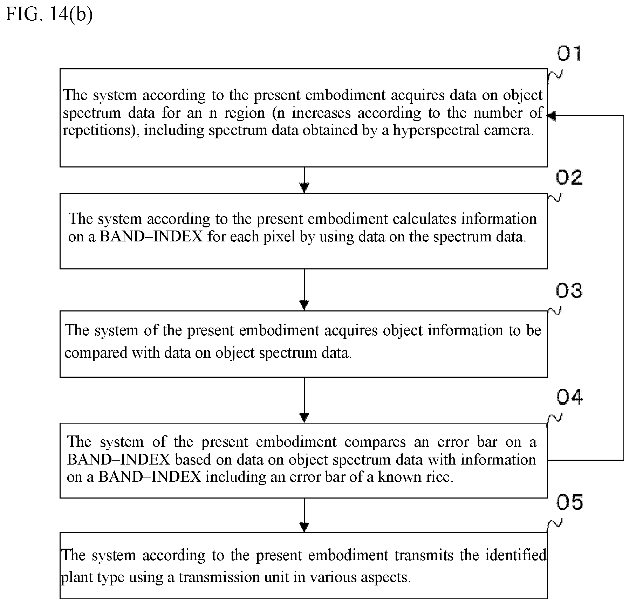

[FIG. 14(b)] FIG. 14(b) is a block diagram illustrating a flow example of the system according to one working example.

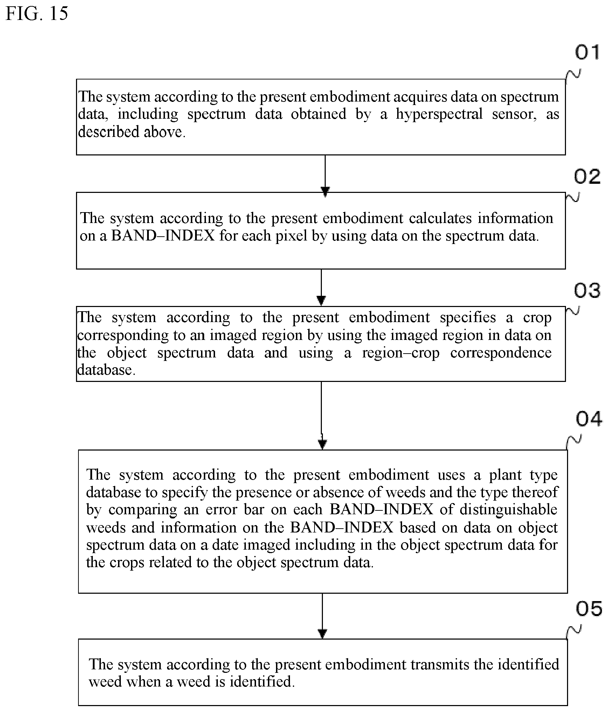

[FIG. 15] FIG. 15 is a block diagram illustrating a flow example of the system according to one working example.

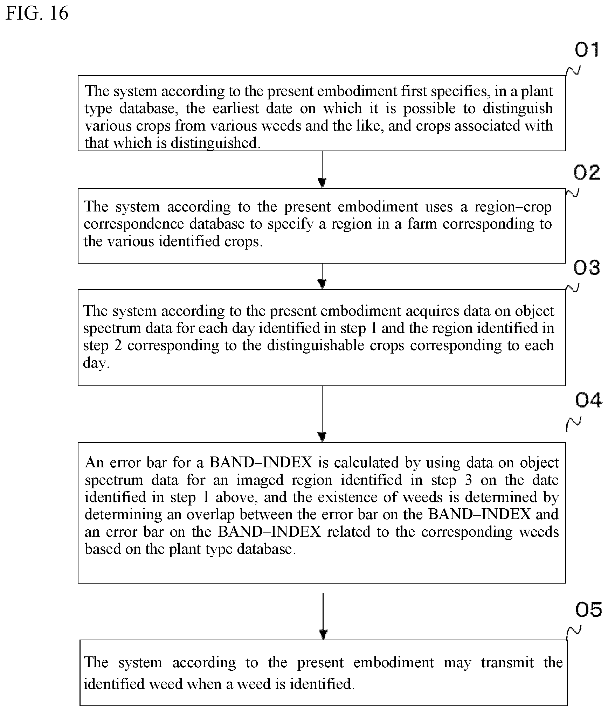

[FIG. 16] FIG. 16 is a block diagram illustrating a flow example of the system according to one working example.

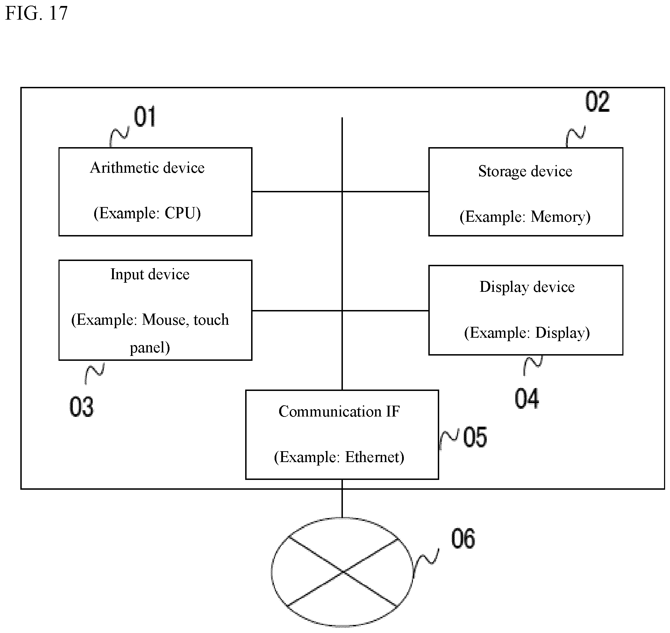

[FIG. 17] FIG. 17 is a block diagram illustrating a configuration of the system according to one working example.

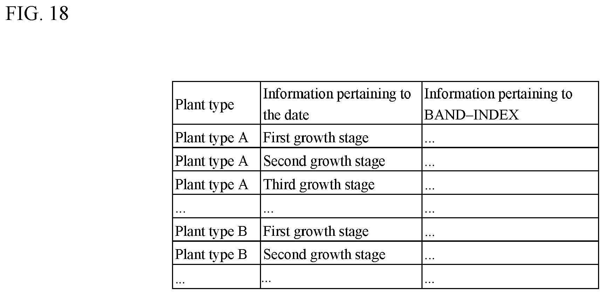

[FIG. 18] FIG. 18 is one example of information stored by a plant-type database that the system according to one working example can access.

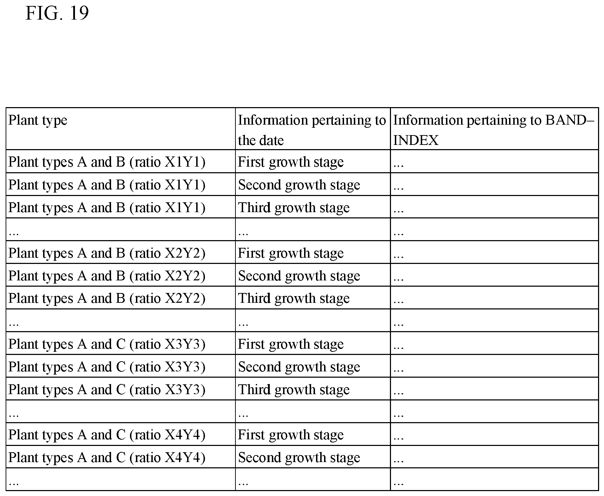

[FIG. 19] FIG. 19 is one example of the information stored by the plant-type database that the system according to one working example can access.

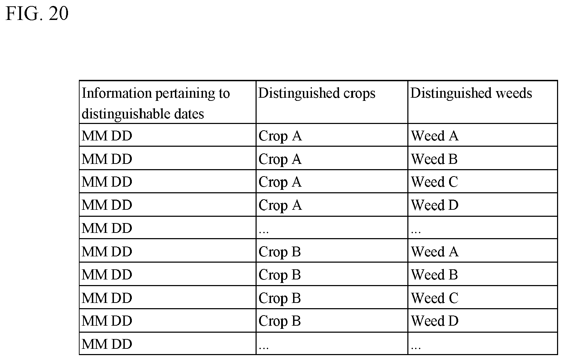

[FIG. 20] FIG. 20 is one example of the information stored by the plant-type database that the system according to one working example can access.

1. Summary and Related Test Results

Information included in a hyperspectral camera that is obtained by the hyperspectral camera is dramatically improved compared to information obtained by a conventional multispectral camera. As such, a usage value of hyperspectral data obtained by using a hyperspectral camera on plants is high. Here, plants may be in contrast to animals. For example, they may be organisms that have roots and live in a fixed location. However, when using hyperspectral data to acquire information from plants, accurate measurement values are necessary. In particular, a reflection spectrum is obtained by dividing a light quantity actually reflected by a plant by a quantity of sunlight irradiated to the plant. However, measuring an entirety of the sunlight actually irradiated to the plant and accurately measuring an entirety of the reflected light, which can be reflected in any direction, are difficult, and handling measurement error may become a problem.

Therefore, in one example of a system according to an invention of the present application, a technique is used of absorbing measurement error by using, with respect to reflection spectrum data, a BAND-INDEX that uses, instead of reflectivity, an INDEX that normalizes a reflectivity of each wavelength by a near-infrared reflectivity as a vertical axis and, instead of a wavelength of a horizontal axis, a BAND having a wide wavelength width.

That is, one example of the system according to the invention of the present application uses the following INDEX.

$$INDEX = (NIR \text{ reflectivity - reflectivity of each wavelength})/(NIR \text{ reflectivity + reflectivity of each wavelength})$$

The NIR reflectivity may be an average reflectivity for 800 nm and above. Here, the wavelengths may be measured for, for example, each wavelength from 325 nm to 1,050 nm.

This formula is a formula similar to the normalized difference vegetation index (normalized difference vegetation index; NDVI) (NIR reflectivity - red-light reflectivity)/(NIR reflectivity + red-light reflectivity) but uses the reflectivity at each wavelength instead of red-light reflectivity. Here, NIR is a reflectivity of a near-infrared region. FIG. 1 illustrates advantages of using the index INDEX instead of reflectivity. (a) is reflection spectra of inubie, and (b) is INDEX spectra thereof, (a) illustrates a graph of a relationship between reflectivity and wavelength for inubie for when a sensor position is changed between being 20, 30, and 60 cm from a highest point of the plant. It can be seen that the reflectivity at near-infrared 800 nm changes depending on the sensor position. Theoretically, the reflectivity of the near-infrared region is close to 100% and should not depend on position. However, 100% is not achieved because an incidence spectrum of sunlight in this position is not being correctly measured. A reflectivity of a plant is obtained by dividing an intensity of light at each wavelength reflected by the plant as measured by a sensor by an intensity of light irradiated to the plant. However, an intensity of light actually irradiated to the plant changes depending on a height of the plant and a height of the sensor as well. As such, 100% is often not achieved. In the diagram, it can not only be seen that the reflectivity in the near-infrared region differs depending on sensor position but also that a height of a peak between 500 and 650 nm also differs. (b) illustrates the INDEX as the vertical axis instead of reflectivity. The INDEX are the same in all positions, regardless of sensor position. Although the peak between 500 and 650 nm in (a) is a valley in the INDEX, a depth thereof is also greater than the height of the peak of the reflection spectrum. Moreover, two small valleys between 600 and 650 nm are made conspicuous. The peak between 500 and 650 nm and the two small peaks between 600 and 650 nm in the reflectivity-wavelength diagram have important information relating to plant growth state and type. As such, the INDEX-wavelength graph, wherein these valleys are conspicuous and the graph is independent of sensor position, is more useful than the conventional graph of reflectivity in obtaining the information relating to plant growth state and type.

Furthermore, in one example of the system according to the invention of the present application, a BAND-INDEX using the above INDEX may be used. Using an index having a wide wavelength width has advantages of being able to further reduce measurement error and being able to represent an error range thereof as an error bar.

Note that in the documents of the present application, hyperspectral data obtained from a hyperspectral camera may include wavelength information and light intensity information for each coordinate of an image. "Each coordinate" of the image may be each pixel. That is, wavelength information and light intensity information may be associated with each two-dimensional element of the image.

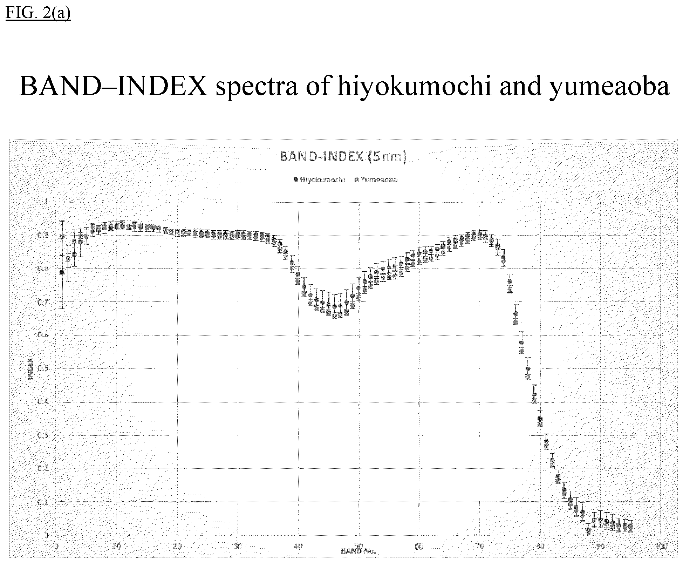

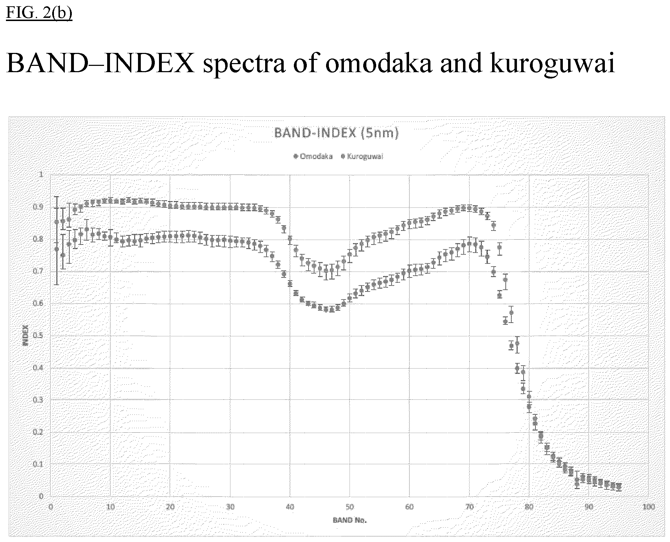

FIG. 2 is a diagram for describing an advantage of using width (BAND) in wavelength. FIG. 2 is BAND-INDEX spectra wherein a width of each BAND is 5 nm and an average of the INDEX for the wavelengths included in this width is made to correspond to each BAND. If the BAND width is too wide, the small valleys above become unclear, and if this is too narrow, the error bar becomes small, making averaging lose its significance. Although the diagram illustrates an example of 5 nm, the width may be greater or lesser than this as long as the small valleys are clear and averaging does not lose its significance. (a) is BAND-INDEX spectra of Hiyokumochi and Yumeaoba. Although a shift in the spectra is seen between bands 40 and 70, the error bars overlap in this range as well, and it can be seen that Hiyokumochi and Yumeaoba are plants of the same species. Because these are both different varieties of rice, it is understandable that as rice, these are classified as the same plant by the BAND-INDEX spectra. (b) is BAND-INDEX spectra of omodaka and kuroguwai, which are rice weeds. Although the spectra also differ, the error bars also do not overlap. Therefore, omodaka and kuroguwai are determined to be plants of different species.

Here, the X axis may be the BAND number from when the BAND is used. That is, the BAND number may correspond to one BAND-INDEX generated for a plurality of wavelengths. Moreover, for each BAND number, an error bar made of a minimum value and a maximum value or of a first and third quartile may be calculated. For example, for omodaka in FIG. 2(b), measurement that measures wavelengths 325 nm to 1,050 nm each time is repeated six times, and INDEX of ten or more wavelengths in each band of a width of 5 nm are averaged in one measurement. For example, for BAND number 30, INDEX of wavelengths no less than 470 nm and less than 475 nm are averaged, this being 0.809 in the first measurement. In the second and subsequent measurements as well, the average value is sought in a similar manner, and a maximum average value, a minimum average value, and an average value for the six measurements are calculated. The minimum and maximum values make up the error bar at band 30.

That is, information on a BAND-INDEX including an error bar according to the present application can be generated by a process such as follows by an information processing device.

First, in each instance of measurement, reflectivities at all wavelengths between 800 nm and 1,050 nm are averaged, and this value is made to be an average NIR reflectivity. The "all wavelengths" used here may be wavelengths in 1 nm units, 0.5 nm units, 2 nm units, or other predetermined units, or continuous values may be used.

Next, for all wavelengths between 325 nm and 800 nm, the INDEX value defined above (that is, INDEX = (NIR reflectivity - reflectivity of each wavelength)/(NIR reflectivity + reflectivity of each wavelength)) is calculated from the reflectivity at each wavelength and the average NIR reflectivity. Here, calculating the INDEX for all wavelengths is calculating the INDEX value corresponding to each wavelength-for example, the INDEX value for 325 nm, the INDEX value for 326 nm, the INDEX value for 327 nm, and the like. Here, an example is illustrated of calculating the INDEX value in 1 nm wavelength increments, but this may be calculated in 0.5 nm wavelength increments, 2 nm wavelength increments, or other predetermined units.

Next, a wavelength region (for example, 325 nm to 800 nm) is divided into a plurality of regions of a predetermined width (for example, a BAND of a width of 5 nm) (for example, 325 nm to 330 nm, 330 to 335 nm, 335 nm to 340 nm, and the like), the INDEX values for all wavelengths in each region (for example, 325 nm to 330 nm) are averaged, and one averaged INDEX (for example, Aw1) corresponding to one region (for example, 325 nm to 330 nm) is calculated. For example, here, averaging the INDEX values for all wavelengths between 325 nm to 330 nm is calculating an average value of the plurality of INDEX values calculated above (for example, the INDEX value for 325 nm, the INDEX value for 326 nm, ... the INDEX value for 329 nm, and the like). Here, an example is illustrated of calculating the INDEX value in 1 nm wavelength increments, but INDEX values calculated in 0.5 nm wavelength increments, 2 nm wavelength increments, or other predetermined units may be averaged. Calculating an average value of a plurality of INDEX values in a predetermined width (for example, a BAND of a width of 5 nm) has an advantage of BAND-INDEX values being able to use information on wavelengths within a predetermined region.

By repeating measurement of these wavelengths 325 nm to 1,050 nm a plurality of times (for example, n times), in correspondence therewith, a plurality of averaged INDEX (for example, Aw1, Aw2, ... Awn) is obtained for one region (for example, 325 nm to 330 nm). Then, by calculating a maximum value, a minimum value, and an average value of this plurality of averaged INDEX (for example, Aw1, Aw2, ... Awn), an error bar (bar including information on a maximum value, minimum value, and average value) of an INDEX value for a BAND of one region (for example, 325 nm to 330 nm; corresponding to one BAND number) can be generated.

This technique does not individually use information on reflectivity at a single wavelength and has an advantage of obtaining, via an error bar, distribution information of INDEX values of one region obtained from reflectivities at all wavelengths in one region (for example, 325 nm to 330 nm). By averaging INDEX values at each wavelength instead of first averaging wavelengths at each BAND, as above, measurement error is suppressed by the INDEX. FIG. 2(b) is a graph that is a result of similarly calculating the minimum, maximum, and average values for the other BAND numbers as well. Note that by calculating, as above, a BAND-INDEX for BAND numbers that process information on wavelengths of a predetermined range, noise can be reduced and, when comparing two or more BAND-INDEX spectra, a similarity of the spectra can be determined by viewing a presence or absence of error-bar overlap.

Furthermore, the above error bar is favorable in that a presence or absence of overlap in at least one or more error bars can be used in determining a presence or absence of similarity in spectral data and, by extension, collecting information on plant status (for example, collecting information on plant growth stage), determining plant type (for example, identity with a crop, identity with a weed, or distinguishing between a crop and a weed), and the like.

As above, each pixel of an image imaged by a hyperspectral camera includes light intensity information for each wavelength including 325 nm to 1,050 nm. As such, for each pixel, a BAND-INDEX and an error bar respectively corresponding to each BAND number (for example, BAND numbers 1 to 95) can be calculated. This makes a wavelength range be, for example, from 325 nm to 330 nm (BAND 1) to 795 to 800 nm (BAND 95). Note that the BAND-INDEX takes on a value between 0 and 1 based on the calculation formula above. Note that in the prior art of literature 1 above, both sides of a green band are removed. However, in one example, it is important to compare by including the removed regions (ultraviolet to yellow, red to near infrared). Although the wavelength range uses 325 to 1,050 nm, which is from ultraviolet to near infrared, the wavelength region being compared is from BAND 1 to 95. As such, 800 nm is the longest wavelength region. Note that when calculating an index at each BAND, between 800 nm and 1,050 nm, it is confirmed that reflectivity is not dependent on wavelength. An average reflectivity of this region is made to be a near-infrared value, and this is used to find an index standardized based thereon. As such, in terms of such an average being used, it can be said that comparison is performed for all wavelengths between 325 nm and 1,050 nm.

Furthermore, the prior art does not include using a BAND-INDEX to identify regions of not only spectrum non-matching but also regions of spectrum matching. Even if the prior art could identify non-matching, matching would need to be identified by accounting for variation in spectrum measurement and thus would not be possible by the prior art. The art according to the present application uses BAND-INDEX analysis to examine, for the first time, matching wavelength regions and non-matching wavelength regions over an entire region, from ultraviolet to near infrared (all wavelength regions (BAND 1 to 95)). Clarifying this region enables plant certification. Even if there were art that extracts a portion of the wavelength region, such art would provide low-precision certification because plant certification is enabled for the first time by clarifying non-matching and matching regions over an entire region of ultraviolet to near infrared.

Furthermore, adding an error bar to continuous wavelengths is impossible; an error bar can be added for the first time by using BAND. Moreover, adding an error bar to an INDEX value differs from adding an error bar to a reflectivity value and is standardized as above. As such, changes in testing conditions, errors in measurement, and the like are also affected less. Because of this, the error bar can truly represent a location of and daily changes in the plants and represent how much the plants change daily in each growth stage. Therefore, even if there were a conventional error bar, a meaning and significance of the error bar of the BAND-INDEX spectrum would greatly differ.

The INDEX value increasing means that the plant is absorbing light, and this means that the plant is growing. Note that the INDEX decreases in the latter-half stage of growth. In this manner, there is an advantage of being able to use the INDEX value to objectively measure, via changes in a degree of light absorption, changes in plant density and photosynthesis, even when there are no objective changes in photographs and a degree of growth cannot be observed. In this manner, because the INDEX is associated with plant photosynthesis and growth, there is an advantage of a possibility of being able to sense insufficient water or fertilizer supply, diseases, and the like via the INDEX.

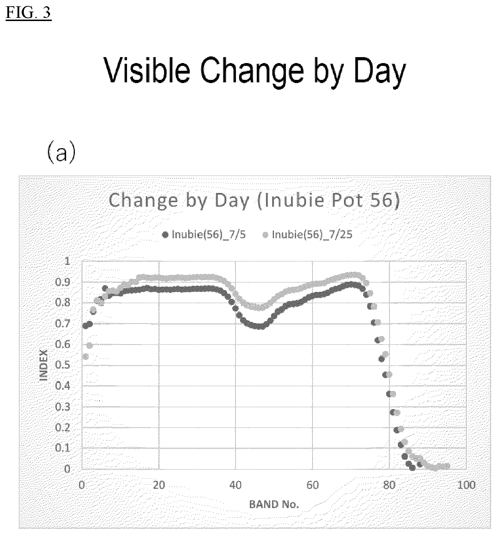

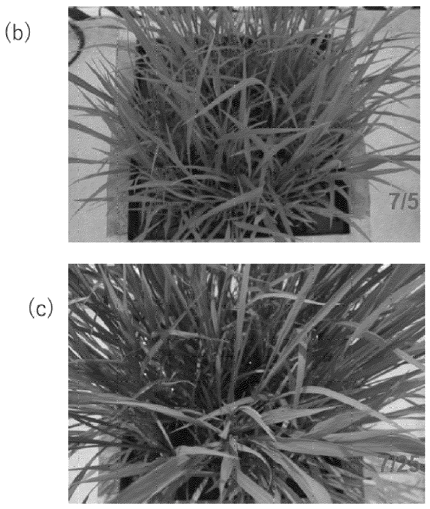

FIG. 3 is one example illustrating a relationship between plant appearance and the BAND-INDEX. For inubie, visually, there is hardly a difference between (b) July 5 and (c) July 25. However, in the present diagram, (a) the BAND-INDEX is moved upward as a whole. This is thought to be because a degree of sunlight absorption increases in the ultraviolet-visible wavelength region as the leaves grow. In this manner, there is an advantage of also being able to determine a growth stage by using the BAND-INDEX.

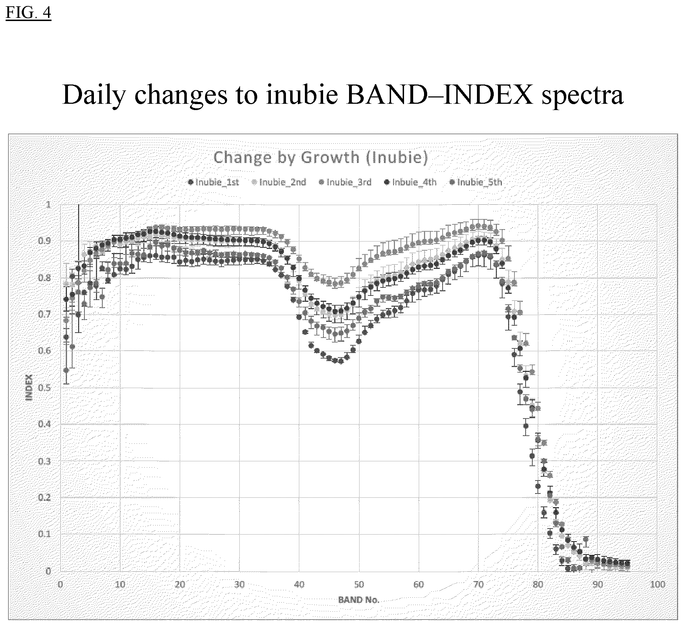

FIG. 4 is a compilation of daily changes in the BAND-INDEX spectrum of the weed inubie obtained from reflection spectra measured from June 21 to Aug. 21, 2019. The BAND-INDEX spectrum is classified into five growth stages based on a presence or absence of error-bar overlap. Growth stage 1 is June 21, stage 2 is July 5 to 10, stage 3 is July 17 to July 30, stage 4 is Aug. 2 to 9, and stage 5 is Aug. 21. Measurement was not performed every day. It can be seen that for inubie, as time passes from stage 1 to stage 3, the INDEX increases and the spectrum rises across all BAND numbers. This is thought to be in conjunction with growth. However, it can be seen that this is reversed starting from stage 4, the INDEX decreasing and the spectrum falling across all BAND numbers. This is because a degree of sunlight absorption decreases after growth stops upon ripening.

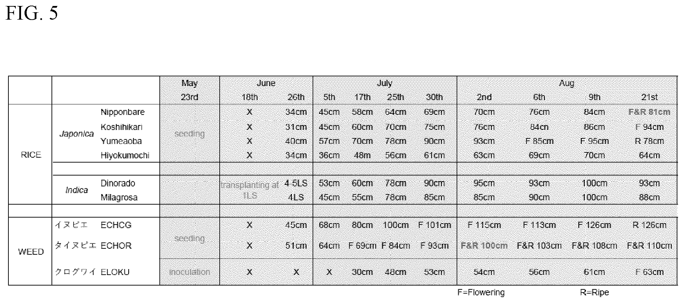

FIG. 5 illustrates flowering times and ripening times for various rice types and various weed types. For example, the flowering time of inubie is July 30. This is consistent with the BAND-INDEX increasing until July 30 and the BAND-INDEX spectrum rising until stage 3.

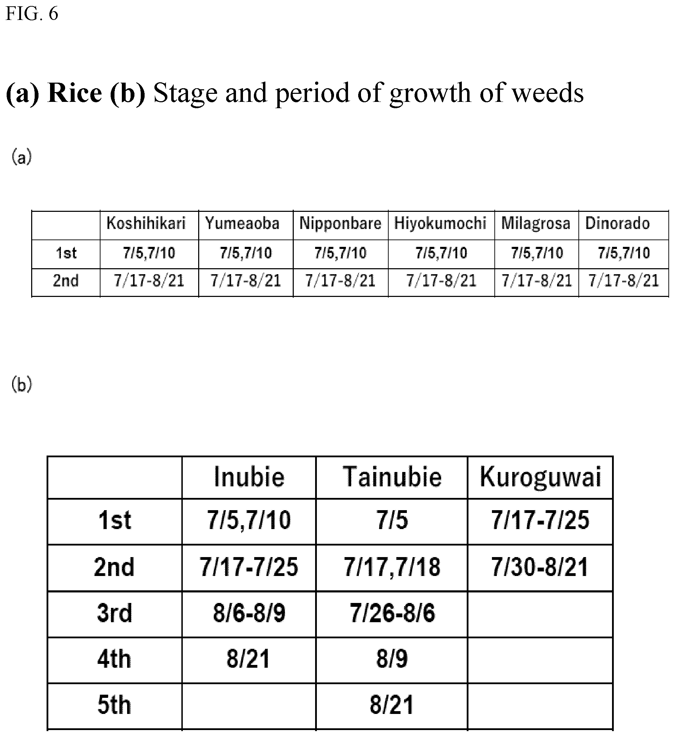

As illustrated in (a) in FIG. 6, BAND-INDEX spectra at each growth stage are compiled for rice (Koshihikari, Yumeaoba, Nipponbare, Hiyokumochi, Milagrosa, Dinorado) measured starting July 5 based on error-bar overlap, and the results are consistent. It is confirmed that the six types of rice are all identical in terms of plant classification. (b) is a result of classifying the spectra for the weeds inubie, tainubie, and kuroguwai into each growth stage. Periods corresponding to each growth stage are indicated in parentheses.

Next, one example that can classify groups of plant types is illustrated. Although different plant types do not always indicate different index widths, the object can be achieved if plant types to be distinguished can be distinguished. For example, by storing only distinguishable plant types in a database, those found in the database are distinguishable plant types. This enables the object of distinguishing to be achieved within a scope of what is stored in the database.

As an example of classifying groups of plant types, distinguishing between rice and weeds is described. In fact, differentiating between weeds and rice in the same period and dispersing herbicide only on the weeds keeps rice production costs down, eliminates a need of wastefully polluting land with the herbicide, and can increase productivity.

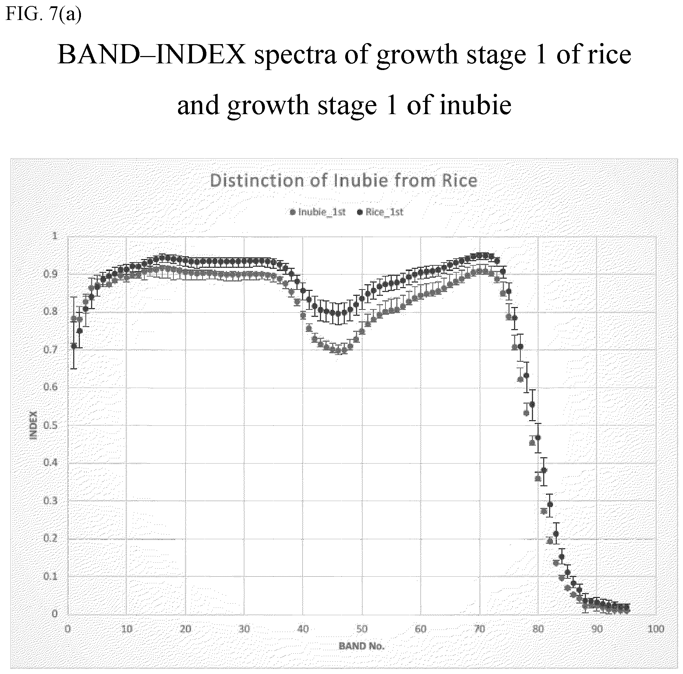

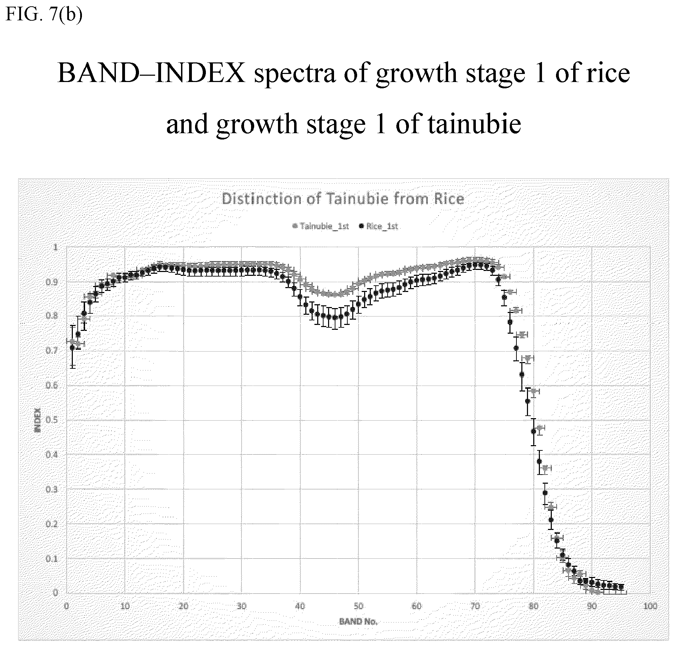

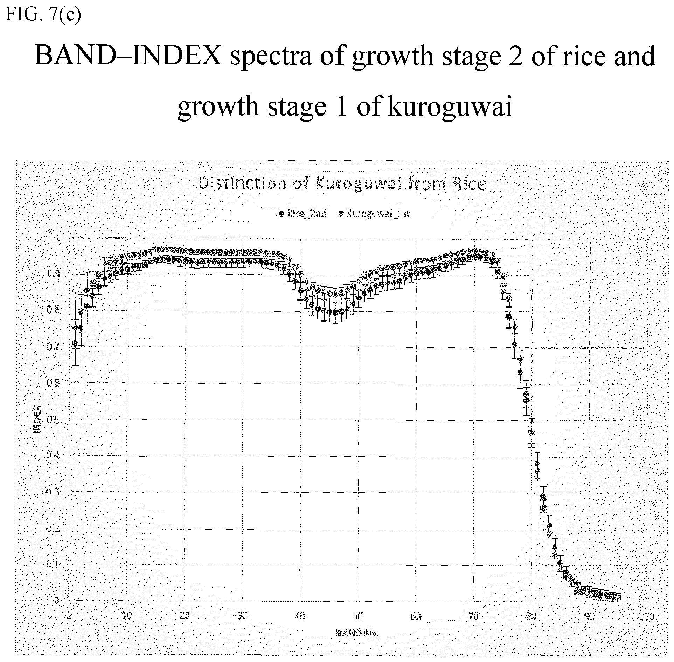

FIG. 7 compares BAND-INDEX spectra in the same period for the rice and various weeds of FIG. 6.

In FIG. 7(a), a region wherein the error bars of rice and inubie do not overlap is seen from BAND number 10 to 90. In (b), a region wherein the error bars of rice and tainubie do not overlap is seen from BAND number 40 to 70. In (c), a region wherein the error bars of rice and kuroguwai do not overlap is seen from BAND number 10 to 40.

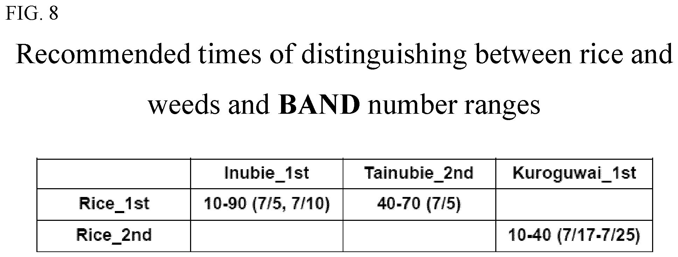

FIG. 8 illustrates times of distinguishing between rice and weeds and BAND number ranges obtained from the BAND-INDEX spectra obtained from FIG. 7. Specifically, rice and the various weeds can be distinguished by the indicated BAND number ranges on the parenthetical dates for each weed. As such, it is recommended to perform measurement for distinguishing between weeds and rice on the parenthetical dates. Measurement may forgo measuring reflectivities at all wavelengths between 325 nm and 1,050 nm and only measure reflectivities of wavelength regions corresponding to the BAND number ranges and a near-infrared reflectivity of no less than 800 nm that is necessary to calculate the INDEX. It is desirable to distinguish between weeds and rice as early as possible. As such, measuring rice and weed spectra early on will also enable earlier distinguishing. Moreover, by creating a database, it may be able to be determined, as below, whether a certain plant type is rice or a weed. The database may, for example, associate a certain crop and a certain weed with a date whereon these can be distinguished and BAND numbers whereby these can be distinguished. When such a database can be mutually referenced, an advantage is that of being able to distinguish between a specific crop and a specific weed on a specific date by referring to specific BAND numbers. An advantage is also that of being able to distinguish between a specific crop and a specific weed on a specific date by referring to specific BAND numbers associated therewith.

What this diagram shows is that, for example, all rice can be distinguished from inubie and tainubie on July 5 at the earliest and from kuroguwai on July 17 at the earliest.

Next, an example is described of using a correlation for the BAND-INDEX.

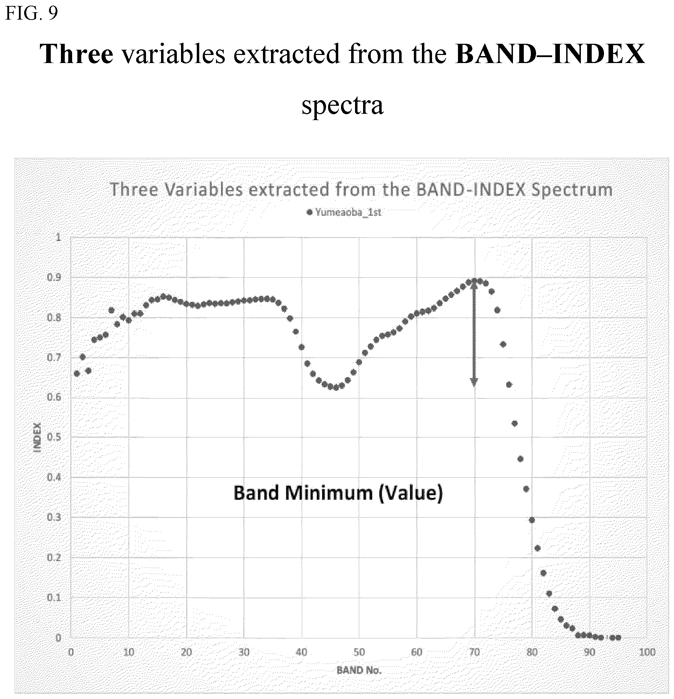

FIG. 9 is a diagram illustrating a "left height", a "BAND minimum value", and a "right height" used as one example to calculate the correlation for the BAND-INDEX. Here, the BAND minimum value (minimum value of the INDEX between BAND number 30 and BAND number 70) may be the INDEX value corresponding to BAND number 46 (550 to 555 nm), the left height may be a difference between the INDEX value corresponding to BAND number 30 (470 to 750 nm) and the BAND minimum value, and the right height may be a difference between the INDEX value corresponding to BAND number 70 (670 to 675 nm) and the BAND minimum value. Note that a difference between the left height and the right height may be based on a compositional difference between chlorophyll A and B.

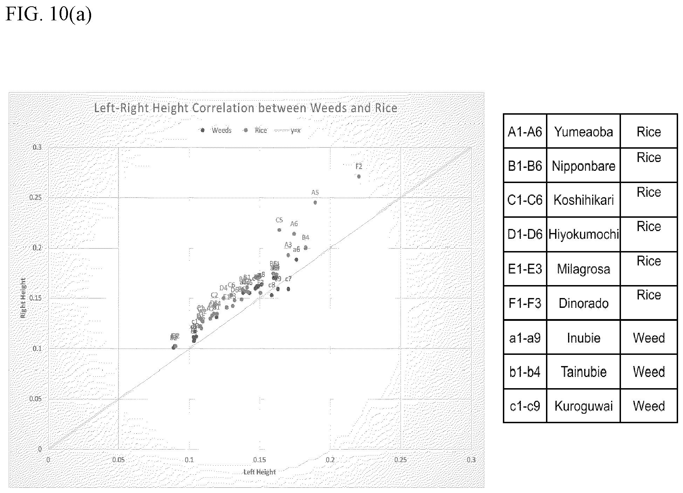

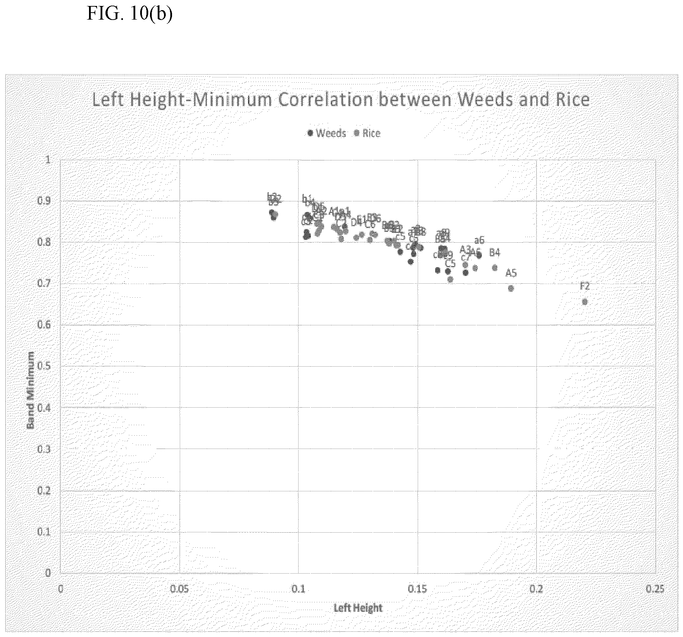

FIG. 10 is one example illustrating a correlation between the above variables obtained from BAND-INDEX spectra of rice and weeds created from reflection spectra obtained on July 17. Here, (a) illustrates a correlation between the left height and the right height. The table lists the plant types of each point. Uppercase letters in these labels indicate rice, and lowercase letters therein indicate weeds. That is, when the X axis is the left height and the Y axis is the right height, regarding the points representing the left height and the right height according to the BAND-INDEX of July 17, it can be seen that the weeds (inubie, tainubie, kuroguwai) are closer to the line $Y = X$ than the rice (Yumeaoba, Nipponbare, Koshihikari, Hiyokumochi, Milagrosa, Dinorado).

That is, whether a certain plant type is rice or a weed can be determined based on a relationship between the line $Y = X$ and points of the left height and the right height based on the BAND-INDEX for all BAND numbers for the certain plant type. This predetermined relationship may, for example, determine the plant type to be rice when a (minimum) distance between the points representing the left height and the right height according to the certain plant type and $Y = X$ is longer than a predetermined length and determine the plant type to be a weed when this distance is not longer than the predetermined length, (b) illustrates a correlation between the left height and the BAND minimum value; no remarkable difference between weeds and rice, such as in (a), is seen.

FIG. 11 is an example wherein a BAND-INDEX is calculated from reflection spectrum data from Mar. 11, 13, 17, and 25 for wheat. (a) illustrates wheat BAND-INDEX spectra with no disease inoculation, (b) illustrates the same with disease inoculation, and (c) illustrates the same with disease inoculation and drug treatment. Because the original reflection spectra were greatly affected by exposed soil, a soil reflection spectrum is estimated, and a correction is made for such. As such, the spectra move up and down, and depths of the valleys seen between BAND numbers 30 and 70 in the BAND-INDEX spectra are not affected by spectrum position. Therefore, the focus is on the correlation between the left height and the right height above.

In FIG. 12, (a) is a diagram illustrating the correlation between the left height and the right height, and (b) is a description of the labels of each point. The labels indicate a measurement date and a wheat type. For all wheat, the left height and the right height decrease over time. Particularly for wheat inoculated with disease and not treated by drugs, these values are the smallest on the final day of measurement. Wheat subjected to disease inoculation and drug treatment is become equivalent to wheat not inoculated with disease. From this, it can be seen that the valley depths become shallow over time due to disease inoculation and that drug treatment suppresses such. The valleys becoming shallow even for wheat that is not inoculated with disease is due to ripening and aging.

**2. Functions Had by System according to One Embodiment**

In light of the testing results as above, a system of one embodiment according to the invention of the present application may have the following functions. That is, the system of one embodiment according to the invention of the present application may have, as in FIG. 13, an input unit that acquires information on hyperspectral data, a reference-data holding unit that holds data on spectral data serving as a reference, a determination unit, and a transmission unit.

**2.1. Input Unit 21**

The input unit has a function of acquiring information on hyperspectral data. The information on hyperspectral data may be information based on a hyperspectral camera. Within the information on hyperspectral data, a reflection spectrum may be imaged by the hyperspectral camera, and this hyperspectral camera may be able to be equipped on a drone, aircraft, satellite, or the like. The information on hyperspectral data may include information obtained in conjunction with imaging by the hyperspectral camera. The information on hyperspectral data may include data on spectral data. The data on spectral data may include hyperspectral data acquired by being imaged by the hyperspectral camera, a date whereon these data are imaged, and/or information on a geographical position wherein these data are imaged. The hyperspectral data acquired by being imaged, the date whereon these data are imaged, and/or the information on the geographical position wherein these data are imaged may be mutually associated and included in the information on spectral data. Moreover, this geographical position information may include information indicating an imaging position according to the GPS or another technique. As described below, this association with a geographical position has an advantage of enabling specification of a plant and/or a plant growth state in association with a geographical position when a plant type and/or a plant growth state for a specific pixel in the hyperspectral data is determined. Moreover, the information on spectral data may include a height of a measurement point. The height of the measurement point may be obtained by, for example, lidar, and measurement data and a GPS geographic image may have distortion correction and ortho-correction applied thereto.

**2.2. Reference-Data Holding Unit 22**

The reference-data holding unit has a function of holding information including hyperspectral data serving as a reference for each plant type. The reference-data holding unit may include various databases. Moreover, the reference-data holding unit may be configured so instead of including various databases, it can access the various databases and acquire necessary data by accessing another information processing device. The databases may include a plant-type database and/or a region-crop correspondence database, which are described below. Note that the hyperspectral data serving as a reference are preferably accurate information on each plant type but may also include measurement error for reflectivity and the like. In the invention of the present application, as described below, using an error bar provides an advantage of enabling more accurate determination of plant-type identity even if there is such measurement error. Note that here, the databases may be large-scale databases or small-scale databases. They may also not be explicitly referred to as databases, as in hard disk drives, solid-state drives, and other memories in information processing devices such as laptop computers. In short, they may be anything that stores a plurality of data.

**2.3.** Determination Unit 23

The determination unit has a function of determining a relationship between the acquired information on hyperspectral data and each reference datum had by the reference-data holding unit. For example, the determination unit may determine, as a relationship between the acquired hyperspectral data and one reference datum had by the reference-data holding unit, that these are the same plant type or different plant types. In particular, when there is overlap across all BAND numbers between an error bar according to a BAND-INDEX based on the acquired hyperspectral data and an error bar according to a BAND-INDEX based on one reference datum had by the reference-data holding unit, the determination unit may determine that these are the same plant type, and when there is one BAND number or a plurality of BAND numbers having no overlap, the determination unit may determine that these are different plant types. Moreover, instead of such a configuration, the determination unit may use an Ath prescribed number, described below, in consideration of measurement error to determine, when a number of BAND numbers for which there is no overlap between the error bar according to the BAND-INDEX based on the acquired hyperspectral data and the error bar according to the BAND-INDEX based on one reference datum had by the reference-data holding unit is less than the Ath prescribed number, that these are the same plant type and to determine, when the number of BAND numbers for which there is no overlap is no less than the Ath prescribed number, that these are different plant types. Moreover, these determinations may be made using information on BAND-INDEX for the same growth stage. "Plant" may be a concept superordinate to "crop". Moreover, "plant" may be a concept superordinate to "weed". "Crop" may be a concept superordinate to "rice".

## 2.4. Transmission Unit 24

The transmission unit has a function of transmitting a result of determination by the determination unit. Various transmission aspects may be used. For example, an information processing device per se relating to the transmission unit may be provided with a display unit and have a function of displaying the determined result, or the transmission unit may have a function of transmitting to another information processing device. The other information processing device may be a mobile information processing device, such as a mobile phone or a smartphone, or information processing devices of various aspects, such as a server, a cloud, or a desktop computer. Moreover, the other information processing device may be an information processing device relating to an aircraft. For example, it may be an information processing device relating to operation of a drone. In this situation, information for operating the drone so as to disperse a specific herbicide in a specific location may be transmitted. In this situation, even dispersing a specific herbicide in a specific location can be automatically transmitted to the drone. As such, there is an advantage of being able to deal with weeds without this being a burden. Note that in this operation of the drone, a process may be added of executing this drone operation upon obtaining confirmation from a person such as a manager. In this situation, there is an advantage of being able to safely execute drone operation upon obtaining confirmation from a person. Here, the drone may be an unmanned aircraft. Moreover, instead of a drone, the other information processing device above may be an information processing device relating to a conventional aircraft boarded and piloted by a person (for example, a lighter-than-air aircraft, a heavier-than-air aircraft, a fixed-wing aircraft, or a rotary-wing aircraft) and be an information processing device that performs processing relating to herbicide dispersion. Moreover, the other information processing device above may be an information processing device relating to a robot or the like that moves on land instead of a drone or a conventional aircraft. This robot or the like may have a function or device whereby the specific herbicide above is dispersed in a specific location by moving on land. Note that a concept superordinate to these drones, aircraft, tractors, robots, and other devices that can disperse herbicide may also be referred to as an herbicide dispersing device. Note that a drone or an aircraft provided with a hyperspectral camera may be provided with the system of one embodiment so when a weed is able to be specified in an imaged image, an herbicide can be dispersed in this location.

## 3. Embodiments according to Invention of Present Application

## 3.1. System according to First Embodiment

A system according to the present embodiment is a system that can execute a fundamental technique according to the present application. The system acquires information on which among the six types of rice above (Yumeaoba, Nipponbare, Koshihikari, Hiyokumochi, Milagrosa, Dinorado) a plant is. Note that the system of the present embodiment may store each type of rice and information on a BAND-INDEX having an error bar for each type of rice in association with each other. Each type of rice and the information on a BAND-INDEX having an error bar that are associated may be stored in the present system according to growth stages of each type of rice (for example, according to divisions that are divisible as growth stages-such as stage 1, stage 2, and stage 3-or according to appropriate periods such as weekly-such as the first week of July, the second week of July, and the third week of July-or every other week-such as the first half of July, the second half of July, and the first half of August). This is because the information on a BAND-INDEX can change at each growth stage and/or each cultivation period such that a precision of the following comparison improves by the comparison being performed in the same growth stage and/or cultivation period.
Next, information on one hyperspectral datum or a plurality of hyperspectral data wherein a target farm is imaged is acquired. This information on hyperspectral data may include a reflection spectrum and a BAND-INDEX spectrum obtained therefrom. Moreover, this information on hyperspectral data may include a time of photography.
The system according to the present embodiment may be provided with a database (also referred to as a "plant-type database" in the documents of the present application) that mutually associates and includes information on a date whereon spectral data are imaged and information on a BAND-INDEX for each BAND number based on these spectral data for each plant type according to, for example, testing conducted in advance. Here, the information on a BAND-INDEX may be generated based on hyperspectral data imaged one time or a plurality of times for a target plant type. This information on a BAND-INDEX may be generated based on average information based on hyperspectral data imaged a plurality of times. Moreover, the information on a BAND-INDEX may include at least one error bar for each BAND number. Preferably, it may include an error bar for all BAND numbers or a portion thereof. Moreover, this information on a date may use a date whereon hyperspectral data that are used are imaged. The information on a date may include, for example, a growth stage (period).
This plant-type database may be able to extract information associated according to various keys. For example, if a plant type and information on a date are input, information on a BAND-INDEX for information on a date corresponding to this plant type may be able to be extracted. Moreover, if information on a BAND-INDEX is input, upon specifying information on a BAND-INDEX having a predetermined relationship to this information on a BAND-INDEX, a corresponding plant type and growth stage (period) may be able to be extracted. Here, the predetermined relationship may be a relationship wherein the above error bars overlap. Moreover, the relationship wherein the error bars overlap may be a relationship wherein error bars overlap for all BAND numbers or a relationship wherein, in consideration of measurement error, error bars overlap for remaining BAND numbers other than a predetermined number of BAND numbers. Moreover, when this extraction is not necessarily able to specify one datum, this extraction may be able to extract all data that meet a condition. Note that "plant type" may be a concept superordinate to "crop" and a concept superordinate to "weed". Therefore, the plant-type database may include various types of crops, include various types of weeds, include only various types of crops, include only various types of weeds, or include various types of crops and various types of weeds.

One example of data that this plant-type database includes is, for example, FIG. 18. In this diagram, plant type A (for example, rice or a weed), information on a date (for example, a first growth stage), and information on a BAND-INDEX (may include information on an error bar) may be associated and included as the data. Moreover, as in the present diagram, information on BAND-INDEX corresponding to different growth stages for the same plant type A may be associated and included as the data. Likewise, data may also be associated and included for a different plant type B.

Furthermore, the above plant-type database may store information on a BAND-INDEX having an error bar corresponding to spectral data from when a plurality of plants is being cultivated simultaneously in a predetermined region. Here, when a plurality of plants is being cultivated simultaneously, there may be various variations wherein each plant type is mixed at a predetermined ratio. For example, when plant type A and plant type B are present, a portion or an entirety of various variations-such as ratios of A and B of 90% and 10%, 80% and 20%, 70% and 30%, 60% and 40%, and 50% and 50%-may be stored. Moreover, here, each ratio may be an area ratio from when each plant type is viewed from information perpendicular to the ground. Moreover, there may be variations due to, for example, differing cultivation periods despite identical ratios. Moreover, although described here is an example of two plant types, there may be three or more plant types. As this information, information on a BAND-INDEX for each BAND number may be stored based on spectral data from when a plurality of plant types is actually being cultivated simultaneously in a predetermined basin, or information calculated as a calculation value by multiplying information on a BAND-INDEX based on a single plant type by the various ratios above may be stored.

One example of the data that this plant-type database includes is, for example, FIG. 19. In this diagram, specific mixing ratios of plant types A and B (for example, a specific rice type and a specific weed type) (plant type A being ratio X1 and plant type B being ratio Y1), information on a date (for example, a first growth stage), and information on a BAND-INDEX (may include information on an error bar) may be associated and included as the data. Moreover, as in the present diagram, information on BAND-INDEX corresponding to different growth stages for the same combination of plant types A and B but different mixing ratios may be associated and included as the data. Likewise, data may also be associated and included for a different plant type B.

As one example of the plant-type database, there is a database for rice. For example, a plant-type database for six types of rice (Yumeaoba, Nipponbare, Koshihikari, Hiyokumochi, Milagrosa, Dinorado) (also referred to as "rice database") may associate and store each type of rice and information on a BAND-INDEX having an error bar for each type of rice. Moreover, the rice database may include growth stages and/or cultivation periods as information on a date whereon spectral data are imaged. As a result, for example, each type of rice and the information on a BAND-INDEX having an error bar that are associated may be stored according to growth stages of each type of rice (for example, stage 1, stage 2, and stage 3) and/or according to cultivation periods of each type of rice (according to appropriate periods such as weekly-such as the first week of July, the second week of July, and the third week of July-or every other week-such as the first half of July, the second half of July, and the first half of August). This is because the information on a BAND-INDEX can change at each growth stage and/or each cultivation period such that a precision of the following comparison improves by the comparison being performed in the same growth stage and/or cultivation period.

Furthermore, the system of one embodiment may or may not include a database that includes, by mutual association in advance, each region in a farm and a crop type being cultivated in each region (also referred to as "region-crop correspondence database" in the documents of the present application). When the system of one embodiment includes this database, a crop type being cultivated in each region may be able to be specified from each region in the farm.

Next, the flow of processing in one example of the system of the present embodiment will be described with reference to FIG. 14(a) and (b). First, the flow of FIG. 14(a) where a region-crop correspondence database is not used will be described.

Step 1

First, the system of the present embodiment acquires data of spectral data, including spectrum data obtained by a hyperspectral camera, as described above. Note, the data of spectral data to be subject to plant type identification and/or subject to identification of plant type growth stage is also referred to as "object spectrum data."

Step 2

Next, the system of the present embodiment calculates information of a BAND-INDEX for each pixel by using data of the object spectrum data. Based on the formula described above, information of the BAND-INDEX may, for example, include error bars using the BAND-INDEX for each BAND number for every 5 nm of wavelength.

Step 3

Next, the system of the present embodiment acquires object information to be compared with data of object spectrum data. An example of object information is information of a BAND-INDEX including error bars of a known rice cultivar when the known rice cultivar is cultivated in a plot for which data of object spectrum data is imaged. When one of the six rice cultivars described above is cultivated in the plot, information of the BAND-INDEX including the error bars of the corresponding rice cultivar among the six rice cultivars may be selected and acquired based on user or other information. Furthermore, the object information compared to the data of the object spectrum data may be information of the BAND-INDEX including the error bars of the known rice cultivar of the growth stage corresponding to the growth stage at which the data of the object spectrum data was imaged. When the growth stages differ, the precision of comparative determination may be adversely affected.

Step 4

Next, the system of the present embodiment compares data of the object spectrum data with information to be compared and makes a determination. For example, when the rice to be imaged is already known, the system of the present embodiment may determine whether the data of the object spectrum data is the known rice cultivar or a plant type different from the known rice cultivar. Specifically, the system of the present embodiment may compare the error bars of the BAND-INDEX based on the data of the object spectrum data and the information of the BAND-INDEX including the error bars of the known rice cultivar, and when there is no overlap in an Ath prescribed number of BAND numbers or more, determine that the data of the object spectrum data is not the known rice cultivar. Furthermore, in this case, it may be determined to be a weed. Here, the Ath prescribed number of BAND numbers may be appropriately decided in consideration of assumed error.

That is, ideally, when the error bars of the BAND-INDEX based on the data of the object spectrum data and the information of the BAND-INDEX including the error bars of the known rice cultivar overlap in all BAND numbers, it can be determined that the data of the object spectrum data is the same as the known rice cultivar. Conversely, when the error bars of the BAND-INDEX based on the data of the object spectrum data and the information of the BAND-INDEX including the error bars of the known rice cultivar do not overlap in at least one BAND number, it can be presumed that it is not the known rice cultivar (when assuming that only the known rice cultivar is cultivated for the object for which the data of the object spectrum data is imaged).

However, considering measurement error, it may be the same as the known rice cultivar even when there is no overlap in one or a plurality of BAND numbers among all the BAND numbers, and thus the system of one embodiment may be configured to use the presence or absence of overlap to make a determination that takes error into consideration for an Ath prescribed number of BAND numbers or more. The Ath prescribed number may be one or a plurality of numbers. However, when the Ath prescribed number is low, such as 1, statistically, the data quantity may be low, and thus, as described below, the number of pixels may be increased to perform repeated calculation.

Step 5

The system of the present embodiment transmits the identified plant type in various aspects using a transmission unit.

The system of the embodiment described above may or may not use a plant type database. Furthermore, the system of the present embodiment need not use a region-crop correspondence database.

Moreover, in addition to or instead of the method described above, as an example of a variation of the system of the first embodiment described above, from the second repetition onward in acquisition of data of the object spectrum data in step 1 described above, data of the object spectrum data for different imaging object regions including at least a portion of the imaging object region from the preceding instance may be acquired, and the comparison in step 3 described above may be performed again. Note, here, from the second instance onward, data of the object spectrum data for imaging object regions including the whole imaging object region from the preceding instance may be acquired to perform subsequent comparisons. That is, for data of the object spectrum data when compared, the number of pixels may be changed to make a comparison. Here, the number of pixels corresponds to the surface area in which the imaged plant type is growing. For example, when imaging using a drone or imaging using an aircraft, imaging is done remotely, and thus there may be cases such as when one pixel is correlated to a fixed region (for example, a 3 meter $\times$ 3 meter region). The number of pixels in this region has insufficient information for making a determination, and thus it is reasonable to widen the region and make a determination using a plurality of pixels with respect to (for example, a plurality of 3 meter $\times$ 3 meter regions). However, as the number of pixels increases and the amount of information increases by widening the region, the possibility that a plurality of plant type are grown increases, and determination granularity becomes poor, and thus it is preferable to start the region (that is, the number of pixels) small. Furthermore, the number of pixels may be decided based on sensor sensitivity, acceptable weed spread surface area, and/or thresholds taking into consideration errors from error bar comparisons, and the like. This number of pixels may be artificially decided in advance or may be decided based on prescribed rules. In particular, sensor sensitivity and/or acceptable weed spread surface area may be decided based on the type of sensor used to image data of the object spectrum data, imaging position, and the like.

Next, the flow of processing will be described with reference to FIG. 14(b).

Step 1

The system of one embodiment acquires data of object spectrum data for a first region in step 1 described above.

Steps 2 and 3

These are the same as described above. However, when repeating the following, step 3 may be skipped.

Step 4

The system of the present embodiment compares error bars of a BAND-INDEX for the first region based on data of object spectrum data with information of a BAND-INDEX including error bars of a known rice cultivar. Here, when there is no overlap in a Bth prescribed number of BAND numbers for fewer, the processing may return to step 1 and perform a second step and a third step after acquiring data of object spectrum data for a second region having a higher number of pixels than the number of pixels for the first region. Although the surface area of the imaging object is widened by increasing the number of pixels, the amount of information increases, and thus information of a BAND-INDEX including error bars can be generated. Therefore, when the data of the object spectrum data for the second region is used for comparison, compared to when the data of the object spectrum data for the first region is used for comparison, the range of overlap described above will be reduced in some cases and increased in others. When reduced, the possibility of being the same plant type rises, but when increased, the possibility of being different plant type rises. In the case of the latter, it may be determined to be different than the plant type of the comparison object information. Furthermore, in the case of the latter, the data of the object spectrum data may be determined as being a weed (because it is not the rice originally intended to be cultivated).

Moreover, the Bth prescribed number may the number of the BAND number relating to the presence or absence of overlap. For example, there may be error when a number of BAND numbers lower than the Bth prescribed number do not overlap, and thus the number of pixels is increased to perform comparison again. The Bth prescribed number may be decided artificially based on experimental values and the like and may be stored in the system of the present embodiment in advance.

Here, comparison is performed based on a second region having a higher number of pixels than the first region and which included at least a portion of the first region after the above-described comparison based on the first region, but when there is no overlap in the Bth prescribed number of BAND numbers or fewer even in the comparison based on the second region, the step described above may be further repeated based on a third region having a larger number of pixels than the number of pixels of the second region.

Note, even in the comparison in the variation, the object information compared to the data of the object spectrum data may be information of the BAND-INDEX including the error bars of the known rice cultivar of the growth stage corresponding to the growth stage at which the data of the object spectrum data was imaged. When the growth stages differ, the precision of comparative determination may be adversely affected.

Step 5

When, after repeating fewer times than a prescribed number, the number of non-overlapping BAND numbers is a number smaller than the Ath prescribed number, smaller than the Bth prescribed number or is 0, assuming that they are the same, the data of the object spectrum data may be determined to be the same rice cultivar in step 3.

Conversely, when, after repeating fewer times than a prescribed number, the number of non-overlapping BAND numbers exceeds the Bth prescribed number, it may be determined not to be the established rice cultivar in step 3. In this case, determination results may be further output according to information of data of other object spectrum data outside the prescribed range of the imaging region of the data of the object spectrum data.

For example, when the number of non-overlapping BAND numbers similarly exceeds the Bth prescribed number for data of second object spectrum data of a plot outside the prescribed range of the imaging region of the data of the first object spectrum data, it may be determined for the data of the first object spectrum data that growth is poor. Note, in this case, it may be similarly determined for the data of the second object spectrum data as well that growth is poor. As weeds are typically localized, when it is determined that the prescribed range is exceeded and that it is different from the rice cultivar intended to be cultivated in the plot, this is because although the data of the photographed object spectrum data is the established rice cultivar, it is conceivable that information on a BAND-INDEX different from normal growth was generated due to poor growth.

Conversely, when it is determined that the data of the second object spectrum data of the plot outside the prescribed range of the imaging region of the data of the first object spectrum data is the known rice cultivar, it may be determined that the data of the first object spectrum data is a weed. This is because, as weeds are localized as described above, when the BAND-INDEX lacks overlaps only within the prescribed range, the possibility that it is a weed rises.

Furthermore, when, after repeating a prescribed number of times, there is no overlap in the Bth prescribed number of BAND numbers or fewer even after the repetition described above, it can be assumed that determination is not possible.

In the description above, the relationship between the Ath prescribed number and the Bth prescribed number may be arbitrary. That is, the Ath prescribed number may be larger or smaller than or the same as the Bth prescribed number and may be appropriately determined based on experimental values and the like, but there is an advantage that precision can be further improved by setting determined criteria for these.

In the description above, six known rice cultivars are described as the object, but similarly, even for other plant type, information of a BAND-INDEX including error bars for one or each of a plurality of growth stages may be generated by an experiment or the like and stored in a database, and using information thereof, even for other plant type, the system of the present embodiment or the system of a variation thereof may determine whether it is the known plant type by the same processing as described above.

Furthermore, in the description above, assuming that the plant cultivated in the plot is a known rice cultivar, it is determined as poor growth or weeds when the information of the BAND-INDEX including the error bars of the known rice cultivar differs from the known rice cultivar based on the number of differing BAND numbers, but by comparing the information of the BAND-INDEX including the error bars of the known rice cultivar and the information on the BAND-INDEX including the error bars on known weeds, it can more proactively be determined whether the data of the object spectrum data is a known weed.

Note, the time of planting is unknown for weeds, and thus, differently from that described above, information on a BAND-INDEX including error bars, of all growth stages for the known weeds, may be compared. Note, here, information on a BAND-INDEX including a weed error bar for which the time of planting is unnatural may be excluded from comparison based on prescribed rules. For example, suppose that seeds or seedlings of a spectrum of a similar database were planted in March, the growth stage of the similar spectrum were the first, and the period were from May to June. Suppose that a weed variety of a measured spectrum first resembled the spectrum of the first growth stage of this variety in the database in July. The time between the beginning of the first growth stage and the time when the seeds were planted is two months, the time when the seeds of this variety were naturally planted on the farmland would be in May, two months before the measurement. It is examined whether the seeds would be naturally planted in the plot in May, and if unnatural, they are excluded. If there is a possibility, it is determined that the variety is possible. Other similar spectra are similarly examined to narrow down the possible varieties. When the similar spectrum is in the second growth stage onward, the time when the seed would be naturally planted is much earlier, and it is more likely to be unnatural. These are one example, and that in which these are provided as prescribed rules may be applied to the description above.

For the system of the embodiment described above or a variation, the following mode is conceivable as a variation further using a database. First, step 1 and step 2 described above are performed.

Next, as step 3, the system of the present embodiment uses error bars of a BAND-INDEX based on data of the relevant object spectrum data and a plant type database to identify a corresponding plant type. More specifically, a plant type within a plant type database associated with a BAND-INDEX including error bars, which overlaps with the error bars of the BAND-INDEX based on data of the object spectrum data, may be identified. Here, error bar overlap may be of error bars of all BAND numbers or error bars of BAND numbers in a prescribed range. Note, in the system of one embodiment, when there is no overlap of at least one or more BAND numbers between the error bars of the BAND-INDEX for each plant type in the prescribed range and the error bars of the BAND-INDEX based on data of the object spectrum data, it may be determined that the data of the object spectrum data is not the applicable plant type. For example, in the system of one embodiment, when there is no overlap of at least one or more BAND numbers between error bars of a BAND-INDEX for each of all rice cultivars in the plant type database and the error bars of the BAND-INDEX based on data of the object spectrum data, it may be determined that data of the object spectrum data is a weed. Note, even in this comparison, the object information compared to the data of the object spectrum data may be information of the BAND-INDEX including the error bars of the known plant type of the growth stage corresponding to the growth stage at which the data of the object spectrum data was imaged. When the growth stages differ, the precision of comparative determination may be adversely affected.

Finally, as step 4, the system of the present embodiment transmits the identified plant type in various aspects using a transmission unit.

Thus, by utilizing overlap of BAND-INDEX error bars, there are advantages in being able to lessen the effect of error and identify plant type.

Furthermore, when the data of the object spectrum data includes information of the region in the plot for which said spectrum data was imaged, the system of the present embodiment may be able to identify a region within the plot for the identified plant type. For example, the system of the present embodiment may identify and transmit an area within such plot in relation to the identified plant type. When such transmitted details are displayed on a display device, there is an advantage in that a viewer of such information can understand where in the plot the plant type is located. In particular, in a case where weeds are growing in a specific region, when such region can be identified, it is not necessary to waste herbicide, and thus there are advantages of being able to reduce herbicide costs and lower environmental impact. Note, in this case, a region-crop correspondence database may be used to compare error bars of a BAND-INDEX for a crop corresponding to such specific region and the error bars of the BAND-INDEX based on data of the object spectrum data to determine that there is no overlap in at least one or more BAND numbers. In this case, even assuming a weed is present, treatment may be performed in advance such that herbicide is not sprayed on a certain crop. Furthermore, the type of herbicide may be changed according to whether such crop is present or the amount of such crop.

Note, when the system of the present embodiment identifies the plant type as a weed and the region in the imaged plot in which the data on the object spectrum data for which such weed was identified is identified, by transmitting that it is such weed and the region in the plot to another information processing device, the weeds may be automatically sprayed with herbicide. In this case, there is an advantage that automatic weed control treatment can be performed on weeds. Here, for example, the other information processing device may be an information processing device for drone operation, and treatment may be performed such that herbicide for controlling such specific weed is sprayed in such specific region. In this case, there is an advantage that herbicide can be more easily sprayed using a drone. Here, the herbicide may be a herbicide corresponding to the identified weed. In this case, a herbicide better suited to the identified weed may be sprayed. In this case, there is an advantage that it is possible to reduce environmental impact while more efficiently utilizing herbicide.

## 3.2. System According to Second Embodiment

The plant type database of the system of the present embodiment may include information in which information on dates when various crops and various weeds can be distinguished, types of the distinguishable crops, and types of the distinguishable weeds are associated with each other, such as by using experiments performed in advance or information in the plant type database described above (in the present application document, this may also be referred to as "information on distinguishability").

The plant type database may include both the information on distinguishability described above and the information included in the plant type database described in the system of the first embodiment, may include only the information on distinguishability described above, may include only the information included in the plant type database described in the system of the first embodiment, and may include other information. Information on such dates when distinction is possible may include the earliest date that distinguishable crops and distinguishable weeds can be distinguished. When using this earliest date, there is an advantage that the possibility of being able to identify weeds early increases. Furthermore, information on such dates when distinction is possible may include all dates or periods where various crops and various weeds can be distinguished. In this case, there is an advantage that the possibility of being able to identify weeds between periods where distinction is possible increases. Furthermore, such information on dates may include growth stages (periods). FIG. 20 is one example of such information on distinguishability. A combination of the types of distinguishable weeds and types of distinguishable weeds on a specific date such as the earliest date (or in a specific period) may be stored in the information on distinguishable days, being associated with such date or period.

In the plant type database including such information on distinguishability, various pieces of information may be extractable with respect to each other. When such extraction is not necessarily able to identify one piece of data, this extraction may be able to extract all data that satisfies a condition. For example, a combination of distinguishable rice cultivars and weeds may be capable of being extracted from a specific date. In this case, the system of the present embodiment can use the information on distinguishability to identify one or a plurality of distinguishable crops and/or weeds on the specific date, and thus, compared to when information on distinguishability is not used, there is an advantage in that the possibility of efficiently identifying the distinguishable crops and/or weeds on the specific day increases. In particular, although an imaging device such as a drone is required to acquire information on hyperspectral data, there is an advantage in that the possibility that timing of imaging using such imaging device can be optimized.

Furthermore, the system of the present embodiment may be able to use the information on distinguishability to extract distinguishable weeds from a specific date and specific crop. In this case, the system of the present embodiment can, for example, on the specific date, identify known crops and distinguishable weeds in a specific region of a managed plot, and thus a plant type database containing information on the BAND-INDEX with error bars can be used to identify information on the BAND-INDEX with error bars corresponding to such distinguishable weeds, and compared to when not using the information on distinguishability, there is an advantage in that the possibility of being able to identify weeds more accurately increases.

Note, as one example of a method for practical utilization when the above-described dates where distinction is possible include the earliest date, there are advantages in that the system of the present embodiment can, for regular dates such as every day, every three days, or a specific day each week or for dates scheduled in advance, search using the plant type database including information on distinguishability and identify weeds which have passed the dates where distinction is possible, and it is possible to handle weeds early. Note, in the foregoing database, for example, the crop may be rice. Furthermore, the crop may be various types of rice.

The input unit of the system of one embodiment may acquire data on spectrum data imaged for a plot using a hyperspectral camera. Data of hyperspectral data may include spectrum data including wavelength information and light intensity information for each pixel of an image. Furthermore, the data of the hyperspectral data may include information indicating a region in a plot for which such spectrum data was imaged, being associated with such spectrum data. The system of one embodiment may, due to the data of the imaged hyperspectral data including the associated region in the plot, be capable of identifying which region in the plot with which each element of the hyperspectral data is associated.

Also, the system of one embodiment may be capable of identifying the type of crop corresponding to each pixel via the region in the plot corresponding to each pixel based on the data of the acquired hyperspectral data by utilizing the database that includes the relationship between each region in the plot described above and the type of crop cultivated in each region. Furthermore, the data of the hyperspectral data may include information indicating a date on which such spectrum data was imaged, being associated with such spectrum data.

Additionally, the system of one embodiment may, due to the data of the imaged hyperspectral data including information indicating the associated date of imaging, be capable of identifying a later-described date for distinguishing between crop types and weeds. Moreover, the system of one embodiment may be capable of identifying a period for distinguishing between the identified crop type described above and weeds based on the data of the acquired hyperspectral data by utilizing the database described above.

Next, an example of processing using the system of the present embodiment will be described with reference to FIG. 15. In the flow of processing of the system of the second embodiment, description is omitted for portions that are the same as the system of the first embodiment. For example, even in the system of the second embodiment, the processing of steps 1 and 2 in the system of the first embodiment is performed in the same manner.

Step 3

Next, the system of the present embodiment identifies a crop corresponding to the imaged region using the imaged region in the data of the object spectrum data and using a region-crop correspondence database.

Step 4

Next, the system of the present embodiment uses the foregoing plant type database to determine the presence or absence of weeds and the type thereof by determining whether there is overlap between the error bars of each BAND-INDEX of distinguishable weeds and the error bars of the BAND-INDEX based on the data of the object spectrum data on the date of imaging, which is included in the object spectrum data for the crops to the object spectrum data described above. As described above, the plant type database can extract one or a plurality of distinguishable weeds and of error bars of the BAND-INDEX of the distinguishable weeds from information on distinguishable crops and dates on which distinction is possible, and thus the determination as described above is possible.

Step 5

In the system of the present embodiment, when a weed is identified, the transmission unit transmits the identified weed.

**3.3. System According to Third Embodiment**

Although the system of the present embodiment has a similar configuration to the system of the second embodiment, it is an example of a mode in which the flow of processing is different and will be described with reference to FIG. 16.

Step 1

In the plant type database, the system of the present embodiment first identifies the earliest date on which various crops, various weeds, and the like can be distinguished and crops associated with such distinction.

Step 2

Next, the system of the present embodiment uses the region-crop correspondence database to identify a region in a plot corresponding to such identified various crops.

Step 3

The system according to the present embodiment acquires data of object spectrum data for each date identified in step 1 and the region identified in step 2 corresponding to the distinguishable crops according to such dates. For example, in the system of the present embodiment, processing such as transmitting to another information processing device for operating a drone so as to image in a region in the plot identified in step 2 on each date identified in step 1 described above.

Step 4

Error bars of the BAND-INDEX is calculated using data of object spectrum data about the imaged region identified in step 3 on the date identified in step 1 described above, and the existence of a weed is determined by determining overlap between the error bars of the BAND-INDEX and the error bars of the BAND-INDEX related to the corresponding weed based on the plant type database.

Step 5

In the system of the present embodiment, when a weed is identified, the transmission unit may transmit the identified weed.
The system of the present embodiment has an advantage in that it is possible to reduce imaging load and efficiently image weeds in a distinguishable range by imaging a region for crops to be distinguishable objects on dates where crops and weeds are distinguishable.

**3.4. System According to Fourth Embodiment**

The system according to the present embodiment is an example in which the accuracy of determination is improved in the system of the first to third embodiments by comparing a BAND-INDEX including an error bar according to data on object spectrum data and a BAND-INDEX including an error bar related to a weed and using the left height, the BAND minimum value, and/or the right height described above instead of determining whether there is an overlap or in addition to determining whether there is an overlap as described above.
That is, the system according to the present embodiment may determine that there is a weed when a point obtained from the left height and the right height of the BAND-INDEX relating to a crop has a prescribed relationship and a prescribed function relating to the left height and the right height. For example, the prescribed function may be a function of an equal sign for the values of the left height and the right height, and the prescribed relationship may be a relationship corresponding to a distance between the prescribed function. More specifically, the determination unit of the system according to the present embodiment may determine that there is rice when a (minimum) distance between the points of the left height and right height of the BAND-INDEX related to rice as a crop and the prescribed function is longer than a prescribed length, and it may determine that there is a weed when this distance is shorter than a prescribed length. The flow of other processing may be similar to the system according to the first to third embodiments.

## 3.5. Various Aspects

A system according to a first aspect is one "comprising:

an acquisition unit that acquires data on object spectrum data;

a calculation unit that, based on the data on object spectrum data, calculates information on a BAND-INDEX including an error bar; and

a determination unit that performs a comparative determination of the information on a BAND-INDEX including an error bar and information on a BAND-INDEX including an error bar for a specific plant type". Here, the determination unit for performing a comparative determination of the information on the BAND-INDEX including an error bar and information on a BAND-INDEX including an error bar for a specific plant type may determine, for example, whether there are overlapping error bars by comparing each error bar corresponding to each BAND number included in the information on the BAND-INDEX including an error bar and each error bar corresponding to each corresponding BAND number included in the information on a BAND-INDEX including an error bar for a specific plant type. Furthermore, as described above, information on a BAND-INDEX including an error bar may be different depending on the measurement time, even if the plant types are the same. Therefore,

the acquisition unit described above may acquire data on object spectrum data at one time;

the calculation unit may calculate information on a BAND-INDEX including an error bar at the one time; and

the determination unit may perform a comparative determination of the information on the BAND-INDEX including an error bar at the one time and information on the BAND-INDEX including an error bar for a specific plant type corresponding to the one time, and in this situation, there is an advantage in that more precise determination can be performed according to the time.

The system according to a second aspect is one wherein in the first aspect, "the specific plant type is a specific type of weed, and
the determination unit determines whether the error bar of the BAND-INDEX based on the data on object spectrum data overlaps the error bar of the BAND-INDEX based on the specific type of weed".
The system according to a third aspect is one wherein in the first aspect or the second aspect, "the specific plant type is a specific type of rice, and
the determination unit determines whether the error bar of the BAND-INDEX based on the data on object spectrum data overlaps the error bar of the BAND-INDEX based on the specific type of rice".
The system according to a fourth aspect is one wherein in any of the first to third aspects, "the specific plant type is a specific type of rice and a specific growth stage, and
the determination unit determines whether the error bar of the BAND-INDEX based on the data on object spectrum data overlaps the error bar of the BAND-INDEX based on the specific type of rice and the specific growth stage".
The system according to a fifth aspect is one wherein in any of the first to fourth aspects, "the determination unit performs the determination by further using a left height and a right height based on the information on a BAND-INDEX based on the data on object spectrum data".
The system according to a sixth aspect is one wherein in any of the first to fifth aspects, "the system can access a plant-type database and a region-crop correspondence database,

the data on object spectrum data include a date whereon the object spectrum data are imaged,

the information on a BAND-INDEX including an error bar for a specific plant type includes information on a BAND-INDEX for a specific type of weed associated with the date in the plant-type database, and

the determination unit, when it determines that the error bar of the BAND-INDEX calculated based on the data on object spectrum data overlaps an error bar of the BAND-INDEX based on the specific type of weed across all BAND numbers, uses the region-crop correspondence database to specify a region in a farm relating to the object spectrum data".

The system according to a seventh aspect is one wherein in any of the first to sixth aspects, "using the region-crop correspondence database and based on a region included in the data on object spectrum data, a crop whereto the object spectrum data can correspond is specified, and

the determination unit, when it further determines that the error bar of the BAND-INDEX based on the data on object spectrum data does not overlap an error bar of a BAND-INDEX based on the specified crop across at least one or more BAND numbers, specifies the region in the farm relating to the object spectrum data".

The system according to an eighth aspect is one wherein in any of the first to seventh aspects, "the system can access a plant-type database,

a specific date is set,

rice that can be distinguished from a weed on the specific date is specified using the plant database, and

the determination unit, when it determines that the error bar of the BAND-INDEX based on the data on object spectrum data and all error bars of a BAND-INDEX based on the rice that can be distinguished from a weed do not overlap across at least one or more BAND numbers, determines that the region includes the weed".

The system according to a ninth aspect is one wherein in any of the first to eighth aspects, "an instruction for operating a drone is generated so as to disperse an herbicide corresponding to the determined weed in the region".
The system according to a tenth aspect is one wherein in any of the first to ninth aspects, "the calculation unit uses reflection spectrum data for each wavelength included in the data on object spectrum data to calculate an INDEX represented by the following formula:

$$INDEX = (NIR\ reflectivity - reflectivity\ of\ each\ wavelength)/(NIR\ reflectivity + reflectivity\ of\ each\ wavelength)".$$

A method according to an eleventh aspect is one wherein "a computer executes

an acquisition step of acquiring data on object spectrum data,

a calculation step of calculating, based on the data on object spectrum data, information on a BAND-INDEX including an error bar, and

a determination step of performing a comparative determination of the information on a BAND-INDEX including an error bar and information on a BAND-INDEX including an error bar for a specific plant type".

The method according to a twelfth aspect is one wherein in the eleventh aspect, "the computer is provided with a memory that stores the information on a BAND-INDEX including an error bar for a specific plant type".
A program according to a thirteenth aspect "causes a computer to operate as

an acquisition means of acquiring data on object spectrum data,

a calculation means of calculating, based on the data on object spectrum data, information on a BAND-INDEX including an error bar, and

a determination means of performing a comparative determination of the information on a BAND-INDEX including an error bar and information on a BAND-INDEX including an error bar for a specific plant type".

The program according to a fourteenth aspect is one wherein in the thirteenth aspect, "the computer has a memory that stores the information on a BAND-INDEX including an error bar for a specific plant type".
A system according to a fifteenth aspect is one "comprising:

an acquisition unit that acquires data on object spectrum data; and

a determination unit that performs a comparative determination of the data on object spectrum data and data on a specific plant type at least across an entire wavelength region of 325 nm to 800 nm". In the prior art, there was a technique of comparing using only specific wavelengths, but in this configuration, there is an advantage in that it is possible to determine with higher accuracy that data on object spectrum data is a specific plant type by performing the comparison over the entire wavelength region of 325 nm to 800 nm.

A program according to a sixteenth aspect is one "for causing a computer to function" as the system of any of the first to tenth and fifteenth aspects.

A method according to a seventeenth aspect is "a method ... wherein a computer executes

a step of acquiring data on object spectrum data, and

a step of performing a comparative determination of the data on object spectrum data and data on a specific plant type at least across an entire wavelength region of 325 nm to 800 nm".

4. Each Configuration of the Information Processing Device

The information processing device used for the system according to the invention of the present application may be provided with an input device, an output device, an arithmetic device, a storage device, and a communication device. For example, an arithmetic device 01, a storage device 02, and a communication IF05 may be provided as shown in FIG. 17. Furthermore, the information processing device may be provided with an input device 03 and a display device 04. Furthermore, it may be directly or indirectly connected to a network 06.

The arithmetic device may be a processor, or a CPU, an MPU, a GPU, or the like. Furthermore, it may have a graphics processing unit, a digital signal processor, or the like. In short, the arithmetic device may be a device capable of executing an instruction for a program.

The storage device is a device for recording information. This may be either an external memory or an internal memory, or may be either a main storage device or an auxiliary storage device. Furthermore, it may be a magnetic disk (hard disk), an optical disk, a magnetic tape, a semiconductor memory, or the like. Furthermore, it may have a storage device via a network or a storage device on the cloud via a network. In short, the arithmetic device and the storage device may be configured so as to be capable of executing information processing in cooperation with each other.

The storage device may be provided with a program for executing the system according to the invention of the present application. Furthermore, data that is required when executing the system according to the invention of the present application may also be recorded as appropriate. Furthermore, the storage device may include a database.

The input device is for inputting information, but it may have other functions. Examples of the input device include a keyboard, a mouse, a touch panel, a pen-type pointing device, or the like.

The display device has a function for displaying information. For example, a liquid crystal display, a plasma display, an organic EL display, or the like may be given as examples, but in short, a device capable of displaying information is sufficient. Furthermore, the input device may be provided in part, such as a touch panel.

The network transmits information together with the communication IF. That is, it has a function for transmitting information of the information processing device to another information terminal (not shown) via a network. The communication IF may be any connection type, such as USB, IEEE 1394, Ethernet (registered trademark), PCI, SCSI, and the like. The network may be wired or wireless, and an optical fiber, a coaxial cable, or the like may be used.

The hardware constituting the information processing device according to one embodiment of the invention of the present application may be a general purpose computer or a dedicated computer. Furthermore, the hardware may be a workstation, a desktop computer, a laptop computer, a notebook computer, a PDA, a cellular phone, a smart phone, or the like. Furthermore, the information processing device may be physical or virtual. For example, the information processing device may be virtually realized by using cloud computing. Furthermore, in the present application document, the system may be constituted of one or a plurality of information processing devices.

Examples of the invention described in the embodiments of the present application document are not limited to those described in the present application document and it is needless to say that they are applicable to various examples within the scope of the technical ideas.

Furthermore, in an embodiment in the present application document, the spectrum data may be reflection spectrum data. The reflection spectrum data (reflectivity spectrum) may be obtained by dividing the measured spectrum data of reflected light by the spectrum of incident light separately measured and stored or sunlight previously stored and obtained in literature or the like, or may be simply a spectrum of reflected light intensity (which has not undergone division processing).

The average calculation in the present application document may be performed by acquiring mean information of a plurality of object values and using various averaging techniques. For example, a technique such as an arithmetic mean (arithmetic mean), a geometric mean (geometric mean), or a harmonic mean may be used. Furthermore, a median (median) may be calculated instead of an average. When information on a BAND-INDEX including an error bar utilizes a median, and when a plurality of values are arranged in ascending order, counting from the smallest value, a first quartile (a value of 25%) may be used as the minimum value of the error bar and a third quartile (a value of 75%) may be used as the maximum value of the error bar. Furthermore, when there are multiple modes (mode. mode) that have the highest frequency (incidence, probability) in the data or probability distribution instead of the mean or median, these minimum values may be used as the minimum value of the error bar, and these maximum values may be used as the maximum value of the error bar.

Furthermore, the processing and procedures described in the present application document may be realized not only by that which is expressly described in the embodiment but also by software, hardware, or a combination thereof. Furthermore, the processing and procedures described in the present application document may be implemented as computer programs and executed by various computers. Furthermore, these computer programs may be stored in a storage medium. Furthermore, these programs may be stored in a non-transient or temporary storage medium.

[Description of Reference Numerals]

| 01 | Arithmetic device |
| 02 | Storage device |
| 03 | Input device |
| 04 | Display device |
| 05 | Communication device |
| 06 | Network |

**Claims**

1. A system, comprising:

   an acquisition unit that acquires data on object spectrum data;
   a calculation unit that, based on the data on object spectrum data, calculates information on a BAND-INDEX including an error bar; and
   a determination unit that performs a comparative determination of the information on a BAND-INDEX including an error bar and information on a BAND-INDEX including an error bar for a specific plant type.

2. The system according to claim 1, wherein

   the specific plant type is a specific type of weed, and
   the determination unit determines whether the error bar of the BAND-INDEX based on the data on object spectrum data overlaps the error bar of the BAND-INDEX based on the specific type of weed.

3. The system according to any one among claims 1 to 2, wherein

   the specific plant type is a specific type of rice, and
   the determination unit determines whether the error bar of the BAND-INDEX based on the data on object spectrum data overlaps the error bar of the BAND-INDEX based on the specific type of rice.

4. The system according to any one among claims 1 to 3, wherein

   the specific plant type is a specific type of rice and a specific growth stage, and
   the determination unit determines whether the error bar of the BAND-INDEX based on the data on object spectrum data overlaps the error bar of the BAND-INDEX based on the specific type of rice and the specific growth stage.

5. The system according to any one among claims 1 to 4, wherein
   the determination unit performs the determination by further using a left height and a right height based on the information on a BAND-INDEX based on the data on object spectrum data.

6. The system according to any one among claims 1 to 5, wherein

   the system can access a plant-type database and a region-crop correspondence database,

the data on object spectrum data include a date whereon the object spectrum data are imaged,
the information on a BAND-INDEX including an error bar for a specific plant type includes information on a BAND-INDEX for a specific type of weed associated with the date in the plant-type database, and
the determination unit, when it determines that the error bar of the BAND-INDEX calculated based on the data on object spectrum data overlaps an error bar of the BAND-INDEX based on the specific type of weed across all BAND numbers, uses the region-crop correspondence database to specify a region in a farm relating to the object spectrum data.

7. The system according to claim 6, wherein

using the region-crop correspondence database and based on a region included in the data on object spectrum data, a crop whereto the object spectrum data can correspond is specified, and
the determination unit, when it further determines that the error bar of the BAND-INDEX based on the data on object spectrum data does not overlap an error bar of a BAND-INDEX based on the specified crop, specifies the region in the farm relating to the object spectrum data.

8. The system according to any one among claims 1 to 5, wherein

the system can access a plant-type database,
a specific date is set,
rice that can be distinguished from a weed on the specific date is specified using the plant-type database, and
the determination unit, when it determines that the error bar of the BAND-INDEX based on the data on object spectrum data and all error bars of a BAND-INDEX based on the rice that can be distinguished from a weed do not overlap across at least one or more BAND numbers, determines that the region includes the weed.

9. The system according to any one among claims 7 to 8, wherein
an instruction for operating an herbicide dispersing device is generated so as to disperse an herbicide corresponding to the determined weed in the region.

10. The system according to any one among claims 1 to 9, wherein
the calculation unit uses reflection spectrum data for each wavelength included in the data on object spectrum data to calculate an INDEX represented by the following formula:

$$INDEX = (NIR\ reflectivity - reflectivity\ of\ each\ wavelength)/(NIR\ reflectivity + reflectivity\ of\ each\ wavelength).$$

11. A method, wherein a computer executes

an acquisition step of acquiring data on object spectrum data,
a calculation step of calculating, based on the data on object spectrum data, information on a BAND-INDEX including an error bar, and
a determination step of performing a comparative determination of the information on a BAND-INDEX including an error bar and information on a BAND-INDEX including an error bar for a specific plant type.

12. The method according to claim 11, wherein
the computer is provided with a memory that stores the information on a BAND-INDEX including an error bar for a specific plant type.

13. A program that causes a computer to operate as

an acquisition means of acquiring data on object spectrum data,
a calculation means of calculating, based on the data on object spectrum data, information on a BAND-INDEX including an error bar, and
a determination means of performing a comparative determination of the information on a BAND-INDEX including an error bar and information on a BAND-INDEX including an error bar for a specific plant type.

**14.** The program according to claim 13, wherein
the computer has a memory that stores the information on a BAND-INDEX including an error bar for a specific plant type.

**15.** A system, comprising:

an acquisition unit that acquires data on object spectrum data; and
a determination unit that performs a comparative determination of the data on object spectrum data and data on a specific plant type at least across an entire wavelength region of 325 nm to 800 nm.

**16.** A program for causing a computer to function as the system according to any one among claims 1 to 10 and 15.

**17.** A method, wherein a computer executes

a step of acquiring data on object spectrum data, and
a step of performing a comparative determination of the data on object spectrum data and data on a specific plant type at least across an entire wavelength region of 325 nm to 1,050 nm.

FIG. 1(a)

# Reflection spectra of inubie

FIG. 1(b)

# INDEX spectra of inubie

FIG. 2(a)

# BAND–INDEX spectra of hiyokumochi and yumeaoba

FIG. 2(b)

# BAND–INDEX spectra of omodaka and kuroguwai

FIG. 3

# Visible Change by Day

(a)

Change by Day (Inubie Pot 56)

● Inubie(56)_7/5   ● Inubie(56)_7/25

(b)

(c)

FIG. 4

# Daily changes to inubie BAND–INDEX spectra

## FIG. 5

| | | | May | June | | July | | | | Aug | | | |
|---|---|---|---|---|---|---|---|---|---|---|---|---|---|
| | | | 23rd | 18th | 26th | 5th | 17th | 25th | 30th | 2nd | 6th | 9th | 21st |
| RICE | Japonica | Nipponbare | seeding | X | 34cm | 45cm | 58cm | 64cm | 69cm | 70cm | 76cm | 84cm | F&R 81cm |
| | | Koshihikari | | X | 31cm | 45cm | 60cm | 70cm | 75cm | 76cm | 84cn | 86cm | F 94cm |
| | | Yumeaoba | | X | 40cm | 57cm | 70cm | 78cm | 90cm | 93cm | F 85cm | F 95cm | R 78cm |
| | | Hiyokumochi | | X | 34cm | 36cm | 48m | 56cm | 61cm | 63cm | 69cm | 70cm | 64cm |
| | | | | | | | | | | | | | |
| | Indica | Dinorado | | transplanting at 1LS | 4-5LS | 53cm | 60cm | 78cm | 90cm | 95cm | 93cm | 100cm | 93cm |
| | | Milagrosa | | | 4LS | 45cm | 55cm | 78cm | 85cm | 85cm | 90cm | 100cm | 88cm |
| | | | | | | | | | | | | | |
| WEED | イヌビエ | ECHCG | seeding | X | 45cm | 68cm | 80cm | 100cm | F 101cm | F 115cm | F 113cm | F 126cm | R 126cm |
| | タイヌビエ | ECHOR | | X | 51cm | 64cm | F 69cm | F 84cm | F 93cm | F&R 100cm | F&R 103cm | F&R 108cm | F&R 110cm |
| | クログワイ | ELOKU | inoculation | X | X | X | 30cm | 48cm | 53cm | 54cm | 56cm | 61cm | F 63cm |

F=Flowering          R=Ripe

FIG. 6

## (a) Rice (b) Stage and period of growth of weeds

(a)

|       | Koshihikari | Yumeaoba  | Nipponbare | Hiyokumochi | Milagrosa | Dinorado  |
|-------|-------------|-----------|------------|-------------|-----------|-----------|
| 1st   | 7/5,7/10    | 7/5,7/10  | 7/5,7/10   | 7/5,7/10    | 7/5,7/10  | 7/5,7/10  |
| 2nd   | 7/17-8/21   | 7/17-8/21 | 7/17-8/21  | 7/17-8/21   | 7/17-8/21 | 7/17-8/21 |

(b)

|       | Inubie     | Tainubie  | Kuroguwai  |
|-------|------------|-----------|------------|
| 1st   | 7/5,7/10   | 7/5       | 7/17-7/25  |
| 2nd   | 7/17-7/25  | 7/17,7/18 | 7/30-8/21  |
| 3rd   | 8/6-8/9    | 7/26-8/6  |            |
| 4th   | 8/21       | 8/9       |            |
| 5th   |            | 8/21      |            |

FIG. 7(a)

# BAND–INDEX spectra of growth stage 1 of rice and growth stage 1 of inubie

FIG. 7(b)

# BAND–INDEX spectra of growth stage 1 of rice and growth stage 1 of tainubie

FIG. 7(c)

# BAND–INDEX spectra of growth stage 2 of rice and growth stage 1 of kuroguwai

FIG. 8

Recommended times of distinguishing between rice and weeds and **BAND** number ranges

|  | Inubie_1st | Tainubie_2nd | Kuroguwai_1st |
|---|---|---|---|
| Rice_1st | 10-90 (7/5, 7/10) | 40-70 (7/5) |  |
| Rice_2nd |  |  | 10-40 (7/17-7/25) |

FIG. 9

# Three variables extracted from the BAND–INDEX spectra

FIG. 10(a)

| A1-A6 | Yumeaoba | Rice |
| B1-B6 | Nipponbare | Rice |
| C1-C6 | Koshihikari | Rice |
| D1-D6 | Hiyokumochi | Rice |
| E1-E3 | Milagrosa | Rice |
| F1-F3 | Dinorado | Rice |
| a1-a9 | Inubie | Weed |
| b1-b4 | Tainubie | Weed |
| c1-c9 | Kuroguwai | Weed |

FIG. 10(b)

FIG. 11(a)

FIG. 11(b)

FIG. 11(c)

FIG. 12

## Data Label

| Date | Wheat 1 | Wheat 2 | Wheat 3 |
|---|---|---|---|
| Mar. 11 | 1-1 | 2-1 | 3-1 |
| Mar. 13 | 1-2 | 2-2 | 3-2 |
| Mar. 17 | 1-3 | 2-3 | 3-3 |
| Mar. 25 | 1-4 | 2-4 | 3-4 |

Left-Right Height Correlation of Wheat

FIG. 13

Input unit 21

Reference-data holding unit 22

Determination unit 23

Transmission unit 24

FIG. 14(a)

01

The system according to the present embodiment acquires data on object spectrum data including spectrum data obtained by a hyperspectral camera.

02

The system according to the present embodiment calculates information on a BAND–INDEX for each pixel by using data on the spectrum data.

03

The system of the present embodiment acquires object information to be compared with data on object spectrum data.

04

The system of the present embodiment compares an error bar on a BAND–INDEX based on data on object spectrum data with information on a BAND–INDEX including an error bar of a known rice and performs a determination.

05

The system according to the present embodiment transmits the identified plant type using a transmission unit in various aspects.

FIG. 14(b)

01

The system according to the present embodiment acquires data on object spectrum data for an n region (n increases according to the number of repetitions), including spectrum data obtained by a hyperspectral camera.

02

The system according to the present embodiment calculates information on a BAND–INDEX for each pixel by using data on the spectrum data.

03

The system of the present embodiment acquires object information to be compared with data on object spectrum data.

04

The system of the present embodiment compares an error bar on a BAND–INDEX based on data on object spectrum data with information on a BAND–INDEX including an error bar of a known rice.

05

The system according to the present embodiment transmits the identified plant type using a transmission unit in various aspects.

FIG. 15

01

The system according to the present embodiment acquires data on spectrum data, including spectrum data obtained by a hyperspectral sensor, as described above.

02

The system according to the present embodiment calculates information on a BAND–INDEX for each pixel by using data on the spectrum data.

03

The system according to the present embodiment specifies a crop corresponding to an imaged region by using the imaged region in data on the object spectrum data and using a region–crop correspondence database.

04

The system according to the present embodiment uses a plant type database to specify the presence or absence of weeds and the type thereof by comparing an error bar on each BAND–INDEX of distinguishable weeds and information on the BAND–INDEX based on data on object spectrum data on a date imaged including in the object spectrum data for the crops related to the object spectrum data.

05

The system according to the present embodiment transmits the identified weed when a weed is identified.

FIG. 16

01

The system according to the present embodiment first specifies, in a plant type database, the earliest date on which it is possible to distinguish various crops from various weeds and the like, and crops associated with that which is distinguished.

02

The system according to the present embodiment uses a region–crop correspondence database to specify a region in a farm corresponding to the various identified crops.

03

The system according to the present embodiment acquires data on object spectrum data for each day identified in step 1 and the region identified in step 2 corresponding to the distinguishable crops corresponding to each day.

04

An error bar for a BAND–INDEX is calculated by using data on object spectrum data for an imaged region identified in step 3 on the date identified in step 1 above, and the existence of weeds is determined by determining an overlap between the error bar on the BAND–INDEX and an error bar on the BAND–INDEX related to the corresponding weeds based on the plant type database.

05

The system according to the present embodiment may transmit the identified weed when a weed is identified.

FIG. 17

01

Arithmetic device

(Example: CPU)

02

Storage device

(Example: Memory)

Input device

(Example: Mouse, touch panel)

03

Display device

(Example: Display)

04

Communication IF

(Example: Ethernet)

05

06

FIG. 18

| Plant type | Information pertaining to the date | Information pertaining to BAND–INDEX |
|---|---|---|
| Plant type A | First growth stage | ... |
| Plant type A | Second growth stage | ... |
| Plant type A | Third growth stage | ... |
| ... | ... | ... |
| Plant type B | First growth stage | ... |
| Plant type B | Second growth stage | ... |
| ... | ... | ... |

FIG. 19

| Plant type | Information pertaining to the date | Information pertaining to BAND-INDEX |
|---|---|---|
| Plant types A and B (ratio X1Y1) | First growth stage | ... |
| Plant types A and B (ratio X1Y1) | Second growth stage | ... |
| Plant types A and B (ratio X1Y1) | Third growth stage | ... |
| ... | ... | ... |
| Plant types A and B (ratio X2Y2) | First growth stage | ... |
| Plant types A and B (ratio X2Y2) | Second growth stage | ... |
| Plant types A and B (ratio X2Y2) | Third growth stage | ... |
| ... | ... | ... |
| Plant types A and C (ratio X3Y3) | First growth stage | ... |
| Plant types A and C (ratio X3Y3) | Second growth stage | ... |
| Plant types A and C (ratio X3Y3) | Third growth stage | ... |
| ... | ... | ... |
| Plant types A and C (ratio X4Y4) | First growth stage | ... |
| Plant types A and C (ratio X4Y4) | Second growth stage | ... |
| ... | ... | ... |

FIG. 20

| Information pertaining to distinguishable dates | Distinguished crops | Distinguished weeds |
|---|---|---|
| MM DD | Crop A | Weed A |
| MM DD | Crop A | Weed B |
| MM DD | Crop A | Weed C |
| MM DD | Crop A | Weed D |
| MM DD | ... | ... |
| MM DD | Crop B | Weed A |
| MM DD | Crop B | Weed B |
| MM DD | Crop B | Weed C |
| MM DD | Crop B | Weed D |
| MM DD | ... | ... |

Europäisches
Patentamt

European
Patent Office

Office européen
des brevets

## EUROPEAN SEARCH REPORT

Application Number

EP 21 19 4865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HADOUX XAVIER ET AL: "Spectral-spatial pre-processing using multi-resolution 3D wavelets for hyperspectral image classification", 2013 5TH WORKSHOP ON HYPERSPECTRAL IMAGE AND SIGNAL PROCESSING: EVOLUTION IN REMOTE SENSING (WHISPERS), IEEE, 26 June 2013 (2013-06-26), pages 1-4, XP033234921, DOI: 10.1109/WHISPERS.2013.8080709 [retrieved on 2017-10-23] * sections 3 and 4; figure 2 * | 1-15 | INV. G06F7/544 G06K9/62 G06V20/10 |
| A | XIA CHAO ET AL: "Maize seed classification using hyperspectral image coupled with multi-linear discriminant analysis", INFRARED PHYSICS AND TECHNOLOGY, ELSEVIER SCIENCE, GB, vol. 103, 14 October 2019 (2019-10-14), XP085918295, ISSN: 1350-4495, DOI: 10.1016/J.INFRARED.2019.103077 [retrieved on 2019-10-14] * sections 2 and 3 * | 1-15 | |
| A | WANG LU ET AL: "Use of Hyperspectral Imaging to Discriminate the Variety and Quality of Rice", FOOD ANALYTICAL METHODS, SPRINGER NEW YORK LLC, US, vol. 8, no. 2, 26 June 2014 (2014-06-26), pages 515-523, XP035423001, ISSN: 1936-9751, DOI: 10.1007/S12161-014-9916-5 [retrieved on 2014-06-26] * sections "Materials and Methods" and "Results and Discussion" * | 1-15 | TECHNICAL FIELDS SEARCHED (IPC) G06F G06K G06V |

The present search report has been drawn up for all claims

| Place of search | Date of completion of the search | Examiner |
|---|---|---|
| Munich | 9 May 2022 | Tenbieg, Christoph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

**EP 21 19 4865**

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☒ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**REFERENCES CITED IN THE DESCRIPTION**

**Patent documents cited in the description**

- JP 2013109424 A
- JP 2014119296 A
- JP 2014182516 A

- JP 2015077113 A
- JP 2016165303 A
- JP 2013145507 A